# EUROPEAN PATENT SPECIFICATION

(11) **EP 2 987 681 B1**
(45) Date of publication and mention of the grant of the patent: **08.11.2017**
(21) Application number: 14182017.5
(22) Date of filing: 22.08.2014
(51) Int. Cl.: B60R 9/06, B60D 1/06

(54) **Load carrier with operating mechanism**
Lastenträger mit einer Betätigungseinrichtung
Transporteur de charge avec un actionneur

(43) Date of publication of application: 24.02.2016
(73) Proprietor: Thule Sweden AB, 330 33 Hillerstorp (SE)
(72) Inventor: Lundgren, Anders, 514 70 Grimsas (SE); Svensson, Thomas, Vaernamo (SE)
(74) Representative: Wallentin, Lars

(56) References cited:
- EP-A1- 1 393 979
- EP-A1- 2 213 515
- DE-B3-102007 026 375
- FR-A1- 2 905 632
- US-A1- 2013 320 058

## Description

### BACKGROUND OF THE INVENTION

The present subject matter relates to a load carrier with an operating mechanism for operating a clamp mechanism mountable to a coupling device having a tow ball.

In recent years, using load carriers provided on the ball hitch of a vehicle has become increasingly popular. This is due to the fact that such load carriers can be loaded more easily compared to rooftop-mounted load carriers.

In order to mount such load carriers on the coupling device, it is necessary that the clamp mechanisms reliably exert a clamping force on the coupling device so that the load carrier is securely mounted thereon. As the clamp mechanisms are operated by an operating mechanism, it is thus necessary to provide an operating mechanism which allows the user to generate high clamping forces by operating the same. Usually, such load carriers are designed for a specific dimension of the coupling device and arranged to provide an optimum clamping force. However, the dimensions of coupling devices differ from each other and it is furthermore possible that due to deformation of certain parts in the clamp mechanism or the operating mechanism an initial clamping force cannot be reached after long term use. Load carriers with adjusting mechanisms for adjusting the clamping force are known from EP 1 393 979 A1 and US 2013/320058 A1. EP 1 393 979 A1 discloses a load carrier according to the preamble of claim 1.

It is the object of the invention to further develop the above-known load carriers such that a desired clamping force is always achievable by operating the operating mechanism.

### SUMMARY

The present subject matter relates to a load carrier with an operating mechanism for operating a clamp mechanism.

According to the invention a load carrier with an operating mechanism is defined in claim 1.

Since the lever is pivotably supported on the support, a pivoting movement of the lever is possible. The pivotable support of the lever against the support can be established by direct contact between a portion of the lever and the support or can be established with an intermediate element interposed between the lever and the support. The lever can comprise a gripping handle for operating the same. Furthermore, the lever can comprise an engaging member for locking the movement of the lever and an actuating portion for releasing the locking of the lever. The engaging member can comprise an engaging bar the ends of which being engageable with a recess or abutment portion of a suitable element for locking the movement of the lever in an open direction.

The support can be any suitable means for supporting a lever. Such a suitable means can be a rigid structure designed to provide a sufficient supporting function. Accordingly, the support can comprise means for supporting the lever thereon. Furthermore, the support can comprise means for connecting the same to other elements. For example, the support can be designed to be mountable to the clamp mechanism to be operated by the operating mechanism.

The pivot can be an articulated joint. Accordingly, the pivot can be designed so as to enable a rotational movement of the lever about a stationary axis or point of the lever. Accordingly, the pivot can be an axial joint or a ball joint. Furthermore, the pivot can also be realized as a supporting point or area on the support on which a portion of the lever is slidably moved. For example, a portion of the lever contacting the supporting point or area can have the shape of a cam riding on a surface of the support. On the other hand, it is possible to provide such a supporting point or area on an intermediate element provided between the lever and the support. With such a construction, it is possible to support the lever by means of a cam and provide a movablity about a rotational axis wherein the axis is guided. For example, it is possible to guide the latter axis such that it is vertically moved by the action of the cam. In this connection, it is possible to form the support such that the axis is guided by a portion of the support, in side walls for instance.

The force application joint can be any means for transferring force from the lever onto another element. Accordingly, the force application joint is to be understood as a connecting portion which can be constructed in different ways. For example, the force application joint can comprise a hinge mechanism comprising for example a pivot pin which can be fixed to the lever or provided rotatably on the lever. It is also possible that the force application joint comprises at least one part of a ball joint. Accordingly, it is possible, that a ball holder or a ball head of another element is fixed on the lever. According to a preferable embodiment, the force application joint is a pivot pin fixedly and non-rotatably provided on the lever.

The force transmitting element can be any suitable means for transmitting a desired force from the force application joint to the operated member of the clamp mechanism. Accordingly, the force transmitting element can comprise different constructions and configurations. For example, the force transmitting element can be an elongate plate member made of metal. The force transmitting element can also have the shape of a rod. Furthermore, it is also possible to use a steel wire as the force transmitting element. In general, the force transmitting element can comprise any suitable form and material which provides the desired force transmitting function.

According to the present embodiment, the force transmitting element is pivotably connected to the force application joint. For example, in case the force transmitting element is an elongate plate member and a force application joint comprises a pivot pin on which the elongate plate member is mounted, the elongate plate member can comprise an opening having a diameter slightly larger than the outer diameter of the pivot pin. The force transmitting element is connectable to the operated member of the clamp mechanism at a force application section for applying a force on the operated member.

In order to provide a pivotal connection to the operated member of the clamp mechanism, the force application section can comprise different constructions. For example, the force application section can comprise a pin which is insertable into an opening provided in the operated member in order to provide a pivotable connection. On the other hand, the force application section can comprise an opening into which a pin or protrusion of the operated member is insertable. The force transmitting element is designed for applying a force on the operated member. Accordingly, the force transmitting element is either designed to apply a pulling force or a pushing force on the operated member. This is, however, dependent on the construction of the operated member.

The pivotal distance between the force application joint and the pivot is smaller than the pivotal distance between the force application joint and the force application section. Accordingly, the mechanism functions as a toggle lever and amplifies an input force to provide a greater output force. In case the force application joint and the pivot comprise a pin, the pivotal distance can be seen in the shortest distance between the longitudinal axes of the pins.

In a tensioning position of the lever, the force application joint is positioned at a presettable distance from the support. The tensioning position is a position, in which a sufficient tensioning force is generated and transferred to the force transmitting element such that the clamp mechanism is clamped on the coupling device. The tensioning position can be an abutment position of the lever. Preferably, the abutment position is designed so that the lever is placed in a substantially horizontal position when reaching the abutment position. The abutment position can be a position in which the force application joint, the pivot and the force application section are located in the same plane. The tensioning position can also be a position in which the force application joint is positioned such that a rotational force is exerted on the lever in the direction of the tensioning position of the lever. By this, a self-locking function is achieved.

By presetting the distance of the force application joint with respect to the support the final position of the operated member of the clamp mechanism is set. Thus, adjusting the presettable distance from the support effects a change of the final position of the operated member and consequently has influence on the final tensioning force exerted on the coupling device.

According to the invention an adjustment means for presetting the presettable distance in order to adapt the tensioning force of the operated member can be provided. The adjustment means can be any suitable means for changing the distance between the force application joint and the support. For example, the adjustment means can be a means for adjusting the pivotal distance between the pivot and the force application joint. By changing the distance between the pivot and the force application joint, the movement radius of the force application joint about the pivot is changed and consequently the distance of the force application joint from the support in the tensioning position is changed correspondingly. The adjustment means can also be a means for adjusting a distance between the pivot and the support. Since the force application joint is arranged in specific relation to the pivot, changing the distance between the pivot and the support also changes the distance between the force application joint and the support in the tensioning position.

Preferably, the pivot comprises a pivot axis. Accordingly, the lever can be supported on the support by an axial joint or a hinge joint. By this, a reliable force transmitting connection between the lever and the support is achieved enabling a transfer of high loads. Furthermore, such a connection is simple in construction.

The pivot axis can be arranged stationary. By arranging the pivot axis stationary, a shifting of a pivot axis is not possible. In other words, the location of the pivot axis is not movable with respect to the support. Accordingly, the lever is only allowed to rotate about the pivot axis. The latter described stationary arrangement of the pivot axis shall, however, also include the possibility, that a pivot pin is used which is rotatable about its own axis. In other words, arranged stationary only means that the pivot axis is not shiftable with respect to the support. By this, a simple and reliable mechanism is provided.

Furthermore, the pivot axis can be guided such that the shortest distance between the pivot axis and the support is variable. By guiding the pivot axis in this way, it is possible to vary the position of the force application joint in the tensioning position in a defined way. Different possibilities are available for guiding the pivot axis. For example, a guiding groove can be used. This provides a simple and reliable construction for adjusting the shortest distance between the pivot axis and the support in a defined way. The guiding groove can be formed in a side wall of the support, for instance.

According to a preferable embodiment of the present subject matter, the operating mechanism comprises a pivot pin defining the pivot axis. The pivot pin can be arranged rotatable or non-rotatable with respect to the lever. Furthermore, it is possible to mount such pivot pin rotatably or non-rotatably on the support.

Preferably, the adjustment means comprises a means for adjusting the pivotal distance between the pivot and the force application joint. Such an adjustment means can be any mechanism allowing such an adjustment including a screw mechanism or a lever mechanism. Also, a combination of different mechanisms is possible. For example, it is possible to provide a movable element which is movable with respect to the pivot and to provide the force application joint on such movable element.

Advantageously, the operating mechanism comprises an adjustment means with a first adjusting portion and a second adjusting portion arranged pivotably movable with respect to each other about a pivot axis, wherein the force application joint is coupled to the first adjusting portion and the hinge axis is coupled to the second adjusting portion, and an adjusting mechanism for effecting the movement of the first and second adjusting portions with respect to each other so as to adjust the pivotal distance between the hinge axis of the lever and the force application joint, wherein preferably the second adjusting portion is fixed on or integrally formed with the lever.

The first and second adjusting portions can have the shape of flat plates arranged parallel with respect to each other. In order to render the first and second adjusting portions pivotably movable about a pivot axis, the first and second adjusting portions can be coupled to a pivot pin defining the pivot axis. Such a pivot pin can be passed through openings provided in the respective adjusting portion or can be integrally formed with one adjusting portion. In case the pivot pin is integrally formed with one adjusting portion, by casting or welding for instance, the other adjusting portion can be arranged pivotably on such pivot pin.

It is preferred, that the first adjusting portion comprises a first guiding track and thus the second adjusting portion comprises a second guiding track, wherein the adjusting mechanism comprises a pin guided in the first and the second guiding tracks so that a movement of the pin effects a movement of the first and second adjusting portions with respect to each other about the pivot axis.

According to a preferable embodiment of the present subject matter, the adjusting mechanism comprises a threaded rod coupled to the lever at one end and the pin comprises a threaded opening, wherein the pin is mounted on the other end of the threaded rod with the threaded rod passed through the opening so that the pin is movable in the longitudinal direction of the threaded rod upon rotation of the same, wherein the threaded rod comprises an operating portion for rotating the same.

Each of the first and second adjusting portions can comprise a plate and each of the first and second guiding tracks can comprise a groove formed in the plates, wherein the grooves are preferably straight and wherein the first guiding track is inclined with respect to the second guiding track.

Preferably, the adjusting mechanism comprises a force application element pivotably connected to the first adjusting portion and movably arranged with respect to the second adjusting portion, wherein the force application element preferably extends through an opening provided in the second adjusting portion, the opening having a dimension allowing a free movement of the force application element, and wherein the adjusting mechanism preferably further comprises an actuating means for effecting the movement of the force application yoke, the actuating means preferably comprising a screw engaging with the force application element and the lever such that a rotational movement of the screw is transferred into a movement of the force application element with respect to the first adjusting portion in the longitudinal direction of the screw.

The adjustment means can comprise a spacing means for adjusting the distance between the pivot and the support.

Preferably, the spacing means comprises a wedge supporting the pivot on one side and contacting the support on the opposite side, the wedge being movably arranged between the pivot and the support.

Furthermore, the operating mechanism can comprise a locking means for releasably locking the movement of the lever, the locking means having an engaging member engageable with an engaging portion formed on the force transmitting element.

Preferably, the load carrier further comprises the clamp mechanism, wherein the clamp mechanism is mountable to a coupling device having a tow ball supported by a tow ball neck, and wherein the operated member is adapted for directly or indirectly applying a clamping force on the coupling device. The operated member can be operatively coupled to the lever by the force transmitting element which is preferably pivotably connected to the force application joint and which is preferably pivotably connected to the operated member at the force application section. The support of the operating mechanism can be coupled to the clamp mechanism preferably with at least one disc spring being arranged between the support and the housing.

The a clamp mechanism can comprise a ball retainer having a ball support surface contactable at least to a first area of the tow ball located opposite to the tow ball neck.

The ball support surface can have different configurations and can be formed continuous or discontinuous. Accordingly, the ball support surface can have a smooth surface or can comprise recesses. Also, the ball support surface can comprise multiple areas or surfaces spaced from each other so that a gap is provided between them. Furthermore, the ball support surface can have a constant or varying width. For example, the ball support surface can have a ring like shape.

As an alternative, it is possible to provide a ball support surface having the shape of a spherical cap. At least a portion of the inner surface of such a spherical cap will then get into contact with a corresponding portion of the coupling device when the clamp mechanism is mounted on the coupling device. Depending on the shape of the coupling device, a corresponding contact will then be established. For example, in case the coupling device comprises a completely spherical tow ball, the spherical cap can have a curvature corresponding to the shape of the tow ball or can have a curvature having a radius larger than the radius of the tow ball.

The tow ball can comprise a flat upper end meaning that a space will be formed in the spherical cap defined by a portion of the inner surface of the spherical cap and the flat upper end of the tow ball. In this case, it is possible to provide the spherical cap with a corresponding flat upper surface in order to minimize the space between the ball support surface and the tow ball.

The ball support surface is contactable to a first area of the tow ball located opposite to the tow ball neck. Usually, the tow ball neck of a coupling device mounted on a vehicle extends from the tow ball in a vertical downward direction and is formed curved so as to extend towards the vehicle. The first area of the tow ball is located opposite to the tow ball neck. That is, in the configuration described before in which the tow ball neck extends in the vertical downward direction from the tow ball, the first area is located on the upper half of the tow ball. The upper half of the tow ball can be defined as the half of the tow ball located above a substantially horizontal plane extending through the middle of the tow ball and substantially vertical to the extension direction of the tow ball neck in a connecting portion where the tow ball neck is coupled to the tow ball. As is described before, the ball support surface can have different shapes and is contactable at least to the first area. Accordingly, the first area of the tow ball is contacted dependent on the shape of the ball support surface of the ball retainer.

The ball support surface is contactable at least to the first area of the tow ball. Accordingly, it is possible that besides the first area, the ball support surface contacts the tow ball at another area, a portion of the lower half of the tow ball for instance.

The operated member can comprise at least one clamp member having a ball clamping surface contactable at least to a second area of the tow ball located on the side of said tow ball neck. In this case, the operated member is adapted for directly applying a clamping force on the coupling device.

On the other hand, it is possible that the operated member does not comprise a clamp member and is adapted for indirectly applying a clamping force on the coupling device. In this case, the clamp mechanism can comprise at least one clamp member having a ball clamping surface contactable at least to a second area of the tow ball located on the side of the tow ball neck and the operated member can interact with each of the at least one clamp members such that by applying a force to the operated member, a clamping force acting between the ball support surface and the ball clamping surfaces to the tow ball is achievable.

Preferably, the clamp mechanism further comprises at least two clamp members which are distributed about a center axis of the ball support surface.

The center axis of the ball support surface can be an axis about which the ball support surface extends. For example, the ball support surface can have a ring-like shape and - in this case - the center axis can pass through the geometric middle point of the ring-like shape. The center axis can extend in substantially vertical direction when the clamp mechanism is mounted to the coupling device.

The at least two clamp members are distributed about the center axis. Accordingly, the at least two clamp members can be arranged about the center axis at equal distance or at differing distance. Preferably, the at least two clamp members are distributed at equal distance about the center axis. Accordingly, in case two clamp members are provided, the clamp members are preferably arranged on a line passing through the center axis and on opposite sides of the center axis. The at least two clamp members can be provided on the same level along the center axis. However, it is also possible to provide at least one of the at least two clamp members on different levels along the center axis, e.g. in case the dimensions of the clamp members differ from each other.

Each of the clamp members can be movably arranged with respect to the ball retainer and can have a ball clamping surface contactable at least to a second area of the tow ball located on the side of the tow ball neck.

A clamp member can perform different movements in order to be arranged movably with respect to the ball retainer. For instance, a clamp member can be pivotably arranged with respect to the ball retainer or can be arranged slidably along a path with respect to the ball retainer. A pivotal movement allows for a configuration in which the clamp members have a shape which can encompass the tow ball to a greater extent. In other words, arranging a clamp member pivotally with respect to the ball retainer allows the clamp member to have a shape which would not allow the clamp member to be provided around the ball head without such a pivotal movement. By this, it is possible to provide a configuration having improved clamping characteristics. Preferably, the clamp members are constructed such that they are hingedly supported on the ball retainer with a hinge axis provided between both longitudinal ends of the clamp members, preferably substantially midways between both longitudinal ends. In such an arrangement, both ends of the clamp members move about the hinge axis when the clamp members are rotated. Such a configuration has the advantage that the clamp members forming an insertion space between the same for inserting the tow ball when in an opened condition do not need to be opened as much as if they were hinged at their ends.

A movement of the clamp members along a specific path, preferably along a straight line, can be arranged for different purposes, including a higher force application or a locking function for instance, and is of special benefit when used in combination with a pivotal movement. To state it differently, a combined movement of the clamp members is possible and even favorable. In this case, at least one of the clamp members is movable both pivotably and slidably along a path. By this, it is possible to encompass the tow ball with the clamp members by pivotal movement of the same and to move the clamp members together with the tow ball into a position in which the pivotal movement of the clamp members is locked, for instance by engagement of a protrusion provided on the clamp members with a corresponding recess provided in another element of the clamp mechanism, preferably the ball retainer.

However, it is also possible that the clamp members are movable in different ways. For instance, it is possible that one clamp member is pivotably arranged while at least another clamp member is non-pivotably arranged and movable along a specific path only. Accordingly, different configurations are possible as long as the clamp members are movable with respect to the ball retainer.

Each clamp member can have a ball clamping surface contactable to the second area of the tow ball, wherein the second area of the tow ball is located on the side of the tow ball neck. Accordingly, the second area can be located on the lower half of the tow ball. The ball clamping surface can comprise any suitable shape as long as a desired contact with the second area can be established. Preferably, the clamping surface has a shape following the shape of the tow ball in the second area so as to provide a large contact surface. Thus, in case the tow ball comprises a spherical shape, the shape of the ball clamping surface can have the shape of a spherical segment having substantially the radius of the tow ball.

The operated member can comprise a tensioning member arranged movably along the direction of the center axis with respect to the ball retainer and interacting with each of the clamp members such that by applying a force to the tensioning member, a clamping force acting between the ball support surface and the ball clamping surfaces to the tow ball is achievable.

In this case, the tensioning member can interact with each of the at least two clamp members such that by applying a force to the tensioning member, a clamping force acting between the ball support surface and the ball clamping surfaces to the tow ball is achievable.

The tensioning member can have any suitable shape that allows the necessary force generation and/or transfer for achieving the desired clamping force when interacting with each of the clamp members. Here, interacting shall include a direct contact of the tensioning member with the clamp members or a force transfer onto the clamp members by means of a further intermediate element arranged in the force transfer path between the tensioning member and the clamp members so as to effect a movement of the clamp members for tensioning purposes. A direct contact between the clamp members and the tensioning member is, however, preferred. For that purpose, the tensioning member can comprise a force application section contactable with the clamp members. Accordingly, the clamping force acting on the tow ball is generated by a movement of the tensioning member. The tensioning member can be integrally formed or can comprise multiple parts. Furthermore, the force application section can comprise a flange portion for contacting the clamp members.

The tensioning member is guided so as to move along the center axis. For guiding purposes, it is possible to slidably support the tensioning member on the ball retainer. The tensioning member can thus be formed so as to at least partially accommodate the ball retainer therein.

Preferably, by an interaction between the tensioning member and the at least two clamp members, a movement of the at least two clamp members towards the ball support surface of the ball retainer is achievable. Such a movement is realized in case at least one portion of the clamp members performs such movement. In other words, a pivoting movement of the clamp members about an axis formed in the clamp members is also to be considered as movement of the clamp members towards the ball support surface. As already mentioned above, the tensioning member can directly contact the at least two clamp members in order to effect the movement of the same.

It is preferred that by an interaction of the tensioning member and the at least two clamp members, a movement of the tensioning member along the direction of the center axis is at least partially transformed into a movement of the at least two clamp members towards the center axis. In other words, by moving the tensioning member in the direction of the center axis, a movement of the two clamp members for reducing the distance between the clamp members and the center axis is achieved.

Each of the clamp members can comprise a force receiving surface and the tensioning member can comprise a force application section slidably contactable to the force receiving surfaces of the clamp members. The force receiving surface can be provided in any suitable shape and is advantageously formed on a portion of the clamp members facing away from the center axis. It is beneficial if the force receiving surface and the force application section are curved. Such a curvature is preferably designed taking the shape of the ball clamping surface into account. For example, the curvature can be provided concentrically to the curvature of the ball clamping surface. By this, a good force distribution and transfer is achieved. Preferably, the force application section comprises a sliding surface inclined with respect to the center axis. Accordingly, when the tensioning member is moved along the center axis, the force application section slides on the force receiving surface thereby applying a force thereon due to the inclined sliding surface. Depending on the inclination of the sliding surface with respect to the center axis, the movement of the tensioning member is transferred on to the force receiving surface with different characteristics.

Preferably, the tensioning member comprises an opening for passing the tow ball there through. By this, it is possible to provide a clamp mechanism which, when mounted on the coupling device, has the tensioning member arranged below the ball retainer. Furthermore, the inner circumference of the opening can form the force application section of the tensioning member. The inner circumference of the opening can be be formed continuous and can consequently have a ring-like shape. However, it is preferable, if the inner circumference of the opening consists of two or more surfaces. By this, it is possible to provide a flexible opening the inner circumference of which being variable to a certain extent.

The tensioning member can accommodate the clamp members. Accordingly, the clamp members can be provided within the tensioning member. Accordingly, a configuration is possible in which the tensioning member surrounds the clamp members. For example, the clamp members can be directly supported on the tensioning member. In this connection, the ball retainer can be accommodated in the tensioning member. Furthermore, in such a configuration, the force receiving surfaces of the clamp members

Preferably, the clamp mechanism further comprises a housing wherein the tensioning member is slidably guided in the housing and wherein the ball retainer is coupled to the housing. Accordingly, the tensioning member can be accommodated in the housing. The tensioning member can comprise sliding portions which are in direct contact with the housing so as to slidably guide the same in the housing. In order to reduce the friction between the sliding portions and the housing and in order to provide a smooth operation, a friction reduction layer, for example a plastic layer, can be provided on the sliding portions. The ball retainer can be coupled to the housing in different ways, for example by means of screws. In this configuration, the tensioning member is movable with respect to the ball retainer and with respect to the housing. Furthermore, the tensioning member is in this configuration movably arranged between the ball retainer and the housing.

Preferably, the ball retainer is integrally formed with the housing.

Each of the clamp members can comprise a neck support surface contactable at least to the tow ball neck. Accordingly, besides a ball clamping surface, each clamp member can comprise a neck support surface. If the clamp members comprise a force receiving surface, it is preferable if the force receiving surface and the neck support surface are provided at substantially the same position along the center axis.

Preferably, each of the clamp members is movable with respect to the center axis between an open position enabling the insertion of the tow ball between the clamp members and a closed position enabling an abutment of each of the neck support surfaces on the tow ball neck. Thus, by movement of the clamp members, an insertion space is provided allowing an arrangement of the clamp mechanism on the tow ball so that the clamp members are provided around the tow ball. In other words, the tow ball can be arranged in the space provided between the clamp members.

Furthermore, each clamp member can be movable along the direction of the center axis between a proximal position and a distal position with respect to the ball retainer.

In this connection, movable along the direction of the center axis includes every movement which is different from a movement in the radial direction with respect to the center axis. In other words, a movement along the direction of the center axis is not necessarily a movement strictly in parallel with that axis. Rather any movement with a movement component along the direction of that axis falls under the definition of a movement along the direction of the center axis. Thus, a movement of the clamp members along a path which is inclined with respect to center axis also falls under the present definition. However, it is preferred that each clamp member is moved in a direction parallel to the center axis.

The proximal position is to be understood as a position in which the clamp members are, as a whole, arranged nearer to the ball retainer than in the distal position. Thus, a contact between the clamp members and the ball retainer is possible in both positions. Accordingly, there needs to be no space between the ball retainer and the clamp members in order to qualify them being in a distal position. For example, the ball retainer can function as a guide for guiding the clamp members wherein in the distal position a portion of the clamp members protruding from the ball retainer in the center axis direction is larger than a portion of the clamp members protruding from the ball retainer when the same is in the proximal position.

The clamping mechanism can further comprise an arrangement for releasably locking each of the clamp members in the closed position when the clamp members are positioned in the proximal position. By this, it is possible to keep the neck support surfaces in contact with the tow ball neck.

As already described above, the closed position is a position in which the neck support surfaces of the clamp members contact the neck of the coupling device. In order to releasably lock the clamp members in the closed position, different configurations are possible. In case the clamp members are rotatably supported, locked in the closed position means that a rotational movement of the clamp members is prevented. This can be achieved in different ways. For example, it is possible to engage the clamp members with another element in order to lock a rotational movement of the same. On the other hand, it is possible to move a further element into abutment with the clamp members such further elements functioning as a stop preventing a rotation of the clamp members in one direction.

The ball retainer can further comprise a receiving portion and the clamp members can comprise an engaging portion engageable with a receiving portion for blocking a movement of the clamp members.

Preferably, the receiving portion is a recess formed in the ball retainer and the engaging portion is a protrusion formed on the clamp member. As described above, the clamp members can be movable along the direction of the center axis between a proximal position and a distal position with respect to the ball retainer. In case the engaging portion and the receiving portion are formed as described above, the engaging portion of the clamp member can be engageable with the recess of the ball retainer by movement from the distal position into the proximal position. For example, the protrusion formed on the clamp member can be inserted into the recess formed in the ball retainer.

The recess can comprise a shape which allows an insertion of the protrusion in the longitudinal direction of the recess, which corresponds to a direction along the center axis, but does not allow a movement of the protrusion in a direction perpendicular to the longitudinal direction of the recess. By this, a pivoting movement of the clamp members is prevented. In case the movement of the clamp members is blocked in this way in the closed position, the neck support surfaces are kept in contact with the tow ball neck.

Preferably, the ball retainer has sliding surfaces for slidably supporting the clamp members in the direction of the center axis.

In order to provide sliding surfaces, specific guiding paths can be provided in or on the ball retainer. A corresponding portion of the clamp members can be formed so as to be slidable along such a path on the sliding surface. The guiding paths can be formed by providing a groove in the ball retainer.

Preferably, the clamp members comprise two protrusions on opposite sides thereof via which they can be slidably supported on the sliding surfaces formed in the ball retainer. In order to support such clamp members, the grooves or recesses can be provided on two spaced apart portions of the ball retainer such that the grooves face each other. Accordingly, a construction can be provided in which the clamp members are held between two spaced apart portions of the ball retainer in grooves facing each other and defining the guiding path for the clamp members.

In order to render the clamp members rotatably, the sliding surfaces and the protrusions of the clamp members are formed matched with each other. That is, the sliding surfaces are formed taking the shape of the protrusions into consideration. As is obvious from above, the sliding surfaces do not necessarily form an outer surface of the ball retainer. It is also possible to provide a groove defining two sliding surfaces facing each other and arranging the protrusions of a clamp member slidably between the two sliding surfaces. The sliding surface can also be provided as an outer surface of the ball retainer directly facing towards the tensioning member, when the tensioning member is positioned around the ball retainer. In such a configuration, the sliding surfaces support the clamp members from radial inside meaning that the clamp members are not fixedly held on the ball retainer and can separate from the same in the radial outward direction if not prevented by means of a further element of the clamp mechanism. Therefore, in this configuration, the tensioning member can form the counterpart for defining a guiding path in that a sliding surface for the protrusions of the clamp members is provided on the tensioning member as well. In other words, the clamp members can be slidably held between the ball retainer and the tensioning member.

In this connection, it is beneficial if the friction between the tensioning member and the clamp members, more precisely between the tensioning member and a protrusion or pivot pin of the clamp members, is reduced. By this, it is possible to reduce the risk of an undesired lifting of the clamp members when the same are rotated. In case the protrusions or pivot pins of the clamp members rest against a surface of the tensioning member and too much friction is caused between the same, rotating the clamp members can lead to an undesired lifting of the same. This is due to the fact that a high friction causes the pivot pins of the clamp members to roll on the tensioning member rather than sliding thereon. Thus, in order to reduce the friction between the protrusions and the tensioning member, it is possible to provide a sliding surface on the tensioning member having a desired characteristic in this respect or to provide an intermediate element between the sliding portion of the clamp member and the supporting surface of the tensioning member, a sheet metal plate for instance, in order to reduce the friction.

Preferably, the clamp mechanism further comprises an elastic element for urging the clamp members into the open position. The elastic element can be a spring or a rubber band for example. The elastic element can be fixed to the clamp members near the neck support surface at one end and to the tensioning member at the other end thereof. In order to fix the elastic element on the clamp member, it is possible to provide an opening in the clamp member into which the elastic element is inserted so as to protrude from the same in the direction of the tensioning member. For the ease of mounting, the elastic element can comprise an enlarged portion at one end being larger than the opening provided in the clamp member so that a configuration can be achieved in which the enlarged portion abuts against the clamp member, the elastic element extends through the clamp member and a free end of the same is fixable on the tensioning member. With such a construction, it is possible to keep the clamp members in the open position as long as the tow ball is not inserted into the clamp mechanism.

The clamp members can be pivotable about a pivot axis perpendicular and/or offset with respect to the center axis and the movement of the tensioning member can effect a pivoting movement of the clamp members. In order to render the clamp members pivotable about a pivot axis, the clamp members can comprise protrusions which may have a round shape but can generally have any shape suitable for allowing a pivoting movement. For example, the protrusions can be formed such that a pivoting movement is allowed to a certain degree only. In this connection, the outer contour of the protrusion when viewed in cross section perpendicular to the pivot axis can have a curved section and at least one flat section next to the curved section. While the curved section allows for a pivoting movement of the clamp members, the flat section functions as a stop for limiting the pivoting movement in one direction. Nevertheless, the flat section can act as a guiding surface allowing a sliding movement of the clamp members, on the inner surface of a tensioning member, for instance.

Preferably, the clamp mechanism further comprises a pivoting means for pivoting the clamp members wherein the pivoting means comprises a force receiving member contactable with the tow ball and transferring a pushing force exerted thereon by the tow ball into a pivoting movement of the clamp members.

The force receiving member can comprise an abutment portion formed on the clamp members and contactable with the first area of the tow ball.

Preferably, the pivot axis of the clamp members is with respect to a direction of the center axis arranged between the abutment portion and the ball clamping surface.

The pivoting means can comprise a tow ball abutment element pushable along the center axis by the tow ball and operatively connected to the clamp members such that a pushing force exerted on the tow ball abutment element is transferred into a pivoting movement of the clamp members.

Preferably, the tow ball abutment element is a flexible element connecting the clamp members. Such a flexible element can comprise a band made of a fabric for instance.

### BRIEF DESCRIPTION OF THE DRAWINGS

- Figure 1: shows a perspective view of a load carrier and a coupling device of a vehicle onto which the load carrier can be mounted;
- Figure 2: shows an exploded view showing main components of an exemplary clamp mechanism;
- Figure 3: shows a perspective view of a ball retainer and a clamp member associated with the ball retainer;
- Figure 4: shows a sectional view in the direction of arrow A shown in Figure 3;
- Figures 5A and 5B: show perspective views of a clamp member;
- Figure 6: shows a perspective view of a tensioning member;
- Figure 7: shows a sectional view in the direction of arrows B shown in Figure 6;
- Figure 8: shows a sectional view of a clamp mechanism in a clamping state;
- Figures 9A and 9B: show an opened state of the clamp mechanism wherein Figure 9A shows the position of an operating lever in this state and Figure 9B shows a sectional view of the clamp mechanism in that state;
- Figures 10A and 10B: show an intermediate state of the mounting process of the load carrier on a coupling device wherein Figure 10A shows the position of the operating lever and Figure 10B shows a sectional view of the clamp mechanism;
- Figures 11A and 11B: show a balancing position in the mounting process of the load carrier on the coupling device wherein Figure 11A shows the position of the operating lever and Figure 11B shows a sectional view of the clamp mechanism;
- Figures 12A and 12B: show a clamped state of the mounting process of the load carrier wherein Figure 12A shows the position of the operating lever and Figure 12B shows a sectional view of the clamp mechanism in this state;
- Figures 13A and 13B: show a sectional view of a clamp mechanism according to the present subject matter showing elastic elements for urging the clamp members into the open position, wherein 13A shows the clamp members in the closed position and Figure 13B shows the clamp members in the open position;
- Figure 14: shows a sectional view of a modification of the clamp mechanism, in which a means for pivoting the clamp members is provided;
- Figure 15: shows a perspective view of the operating mechanism for operating the clamp mechanism according to the present subject matter;
- Figure 16: shows a perspective view of main components of the operating mechanism in an exploded view;
- Figures 17 and 18: show views of the operating mechanism and the clamp mechanism partially in cross section, wherein Figure 17 shows a state in which the operating mechanism is in an untensioned state and Figure 18 shows a condition in which the operating lever is in a tensioning state;
- Figures 19 to 23: show views of specific elements of the operating mechanism, wherein Figures 19A and 19B show a state in which the operating mechanism is in the state shown in Figure 17 and Figures 20A, 20B and 21 to 23 show states corresponding to that of Figure 18;
- Figure 24: shows an alternative embodiment of an operating mechanism for operating the clamp mechanism;
- Figures 25 to 27: show side views of the operating mechanism shown in Figure 24, wherein some elements are omitted in Figures 26 and 27 for explanation purposes;
- Figure 28: shows a perspective view of a further embodiment of the operating mechanism;
- Figures 29 and 30: show side views of the operating mechanism shown in Figure 28;
- Figure 31: shows a sectional view of the operating mechanism shown in Figure 28 as viewed in the direction of arrow C;

### DESCRIPTION OF THE EMBODIMENTS

In the following, embodiments of the present subject matter will be explained based on the drawings. It is noticed that the drawings show specific embodiments as explained below and further alternative modifications as specified in the description are at least in part not illustrated therein. Furthermore, same reference signs used in the figures denote same components.

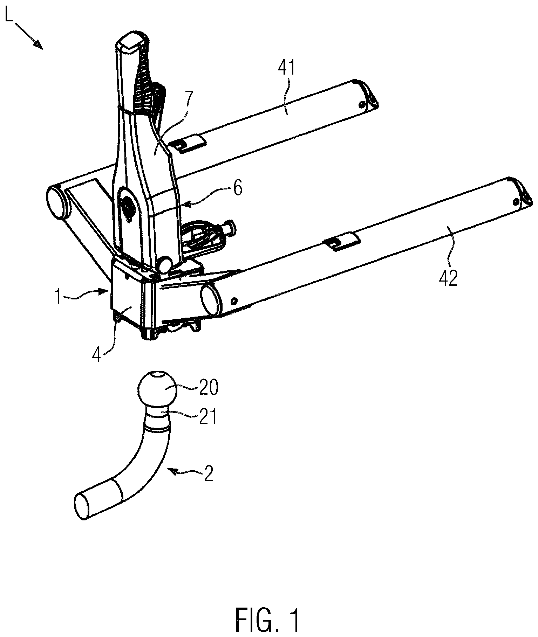

Figure 1 shows a load carrier L comprising an operating mechanism 6 according to the present subject matter for operating a clamp mechanism 1. Furthermore, Figure 1 shows a coupling device 2 having a tow ball 20 and a tow ball neck 21.

First of all, an exemplary clamp mechanism 1 is described. It is noted that the constructions of the clamp mechanism described in the following are only examples of a possible clamp mechanism operable by means of the operating mechanism 6. While using such a clamp mechanism in combination with the operating mechanism 6 as described later is preferred, the load carrier is not limited to such a clamp mechanism. By contrast, the load carrier can comprise a different clamp mechanism as long as the same is operable by the operating mechanism 6.

The clamp mechanism 1 comprises a housing 4 supporting two load carrying means 41, 42 which form suitable supports for supporting fastening means for goods to be transported. The load carrying means 41, 42 both have a bar-like form allowing to fix load carrying elements, for example of a bike carrier, thereto. However, the load carrying means can have any suitable shape as long as it is possible to fix load carrying elements on the same.

As is shown in Figure 1, the operating mechanism 6 for operating the clamp mechanism 1 is provided above the clamp mechanism 1, more specifically, mounted on the housing 4 of the clamp mechanism 1. The operating mechanism 6 comprises a lever 7 which is operated by a user in order to actuate the clamp mechanism 1. The state of the lever 7 shown in Figure 1 corresponds to a state in which the clamp mechanism 1 is in an untensioned state and allows the user to arrange the load carrier L on the coupling device 2. The lever 7 is pivotable in a longitudinal direction of a vehicle on which the coupling device 2 is mounted. It is, however, also possible to provide an operating mechanism in which the lever 7 is pivoted in a different direction. For example, it is possible to arrange the lever 7 such that it is pivotable in a direction substantially perpendicular to the longitudinal direction of the vehicle for space saving reasons.

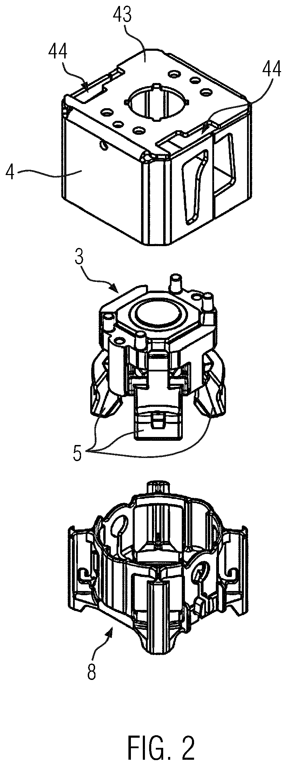

The main components of the clamp mechanism 1 are shown in Figure 2 in an exploded view. The main components shown in Figure 2 include the housing 4, a ball retainer 3, clamp members 5 and a tensioning member 8.

The housing 4 provides enough space for at least partially accommodating the ball retainer 3, the clamp members 5 and the tensioning member 8 therein. Furthermore, the housing comprises an upper portion 43 which can serve as a suitable support for supporting the operating mechanism 6 thereon. In the present embodiment the housing 4 is integrally formed from a sheet metal which is cut and bent into the desired form. Two openings 44 are formed in the upper portion 43 of the housing 4. The function of the openings 44 will be described later.

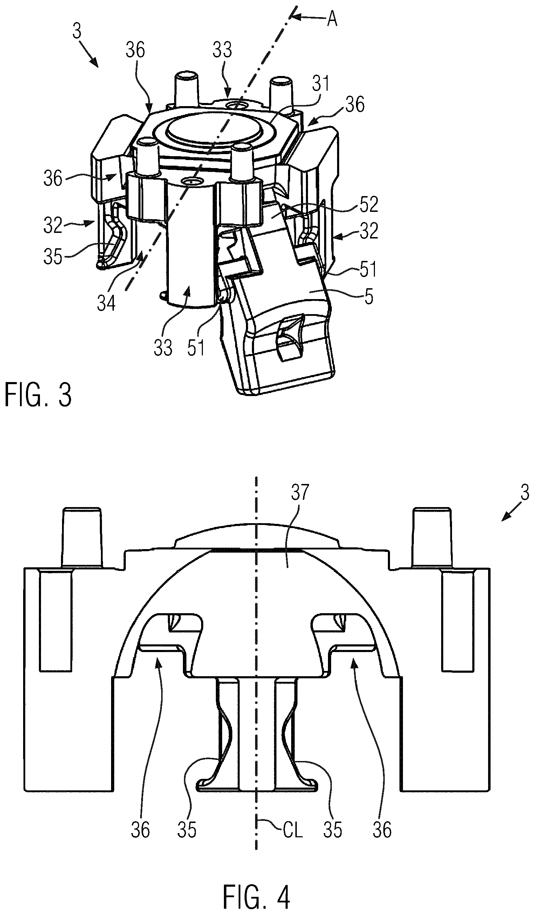

Figures 3 and 4 show the construction of the ball retainer 3 in greater detail. Figure 3 shows an enlarged perspective view of the ball retainer 3 with only one clamp member 5 arranged on the same. Further clamp members have been omitted here for illustration purposes. The ball retainer 3 comprises a support portion 31 extending over substantially the entire width of the ball retainer 3. In Figures 2 and 3, the support portion 31 is also an upper end portion of the ball retainer 3. Furthermore, the ball retainer 3 comprises four leg portions 32, 33 extending in a downward direction from the support portion 31 in Figures 2 and 3. The leg portions 32, 33 are arranged at equal distance from each other so that four clamp member spaces 34, each for accommodating one clamp member 5, are formed between them. On the sides of adjacent leg portions 32, 33 of the ball retainer 3 facing towards each other, recesses are provided in order to form sliding surfaces 35 for supporting the clamp members 5. Theses sliding surfaces 35 are designed to guide protrusions 51 of a clamp member 5 along a specific path.

Furthermore, the ball retainer 3 comprises four recesses 36 each for accommodating an engaging portion 52 of a clamp member 5. The recesses 36 are arranged at equal distance from the leg portions 32, 33 in the upper portion, i.e. the support portion 31, of the ball retainer 3 as shown in Figure 3. The cooperation of the engaging portion 52 of the clamp member 5 with the recess 36 provided in the ball retainer 3 will be described in detail later.

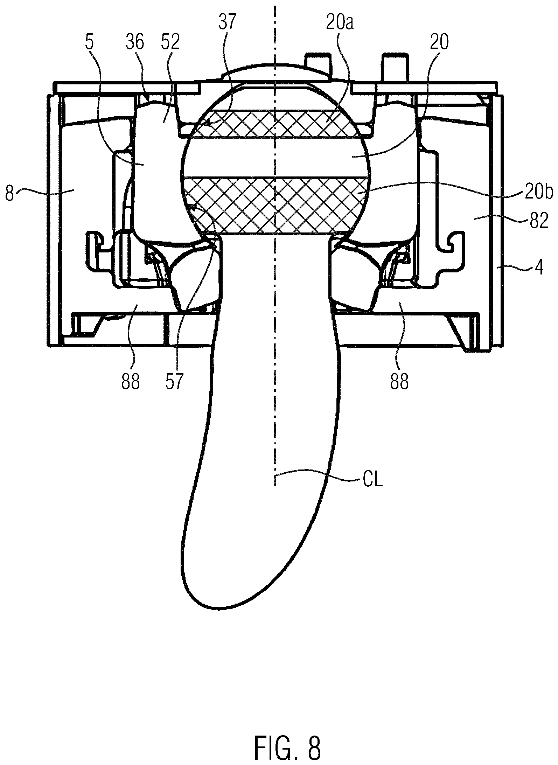

Figure 4 shows the ball retainer 3 in cross sectional view viewed in the direction of arrow A in Figure 3. As is shown in Figure 4, the ball retainer 3 comprises a ball support surface 37 which is provided for contacting the tow ball 20 of the coupling device 2. In order to provide a large contact area, the curvature of the ball support surface 37 substantially corresponds to the curvature of the outer surface of the tow ball 20. The area on the tow ball 20 which is contactable to the ball support surface 37 is also referred to as first area 20a of the tow ball 20 in the following and is shown and described later with reference to Figure 8.

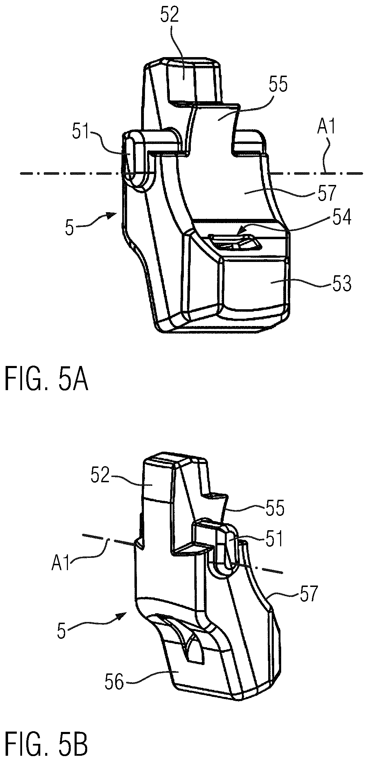

Figures 5A and 5B show perspective views of a clamp member 5 in greater detail. As is shown in Figures 5A and 5B, each clamp member 5 is an elongate element comprising two protrusions 51 which are designed for pivotably supporting the clamp member 5 on the sliding surfaces 35 of the ball retainer 3. The protrusions 51 extend in opposite directions from the lateral sides of a clamp member 5. The protrusions 51 comprise a shape which allows the clamp member to rotate about a pivot axis A1. In other words, the shape of the protrusions 51 is designed such that in cooperation with the sliding surfaces 35 of the ball retainer 3 a pivoting movement of the clamp member 5 about the pivot axis A1 can be effected. In the following, the portion of the clamp member 5 located above the pivot axis A1 in Figure 5A will be referred to the upper portion of the clamp member 5 whereas the portion located below the pivot axis A1 in Figure 5A will be referred to as lower portion of the clamp member 5.

In the upper portion of the clamp member 5, the clamp member further comprises an engaging portion 52 in the form of a protrusion extending in a direction substantially perpendicular to the pivot axis A1. The engaging portion 52 is provided so that the clamp member 5 can be engaged with a corresponding recess 36 in the ball retainer 3 via the engaging portion 52. A pivoting movement of the clamp member 5 about the pivot axis A1 is prevented when the engaging portion 52 is engaged with the corresponding recess 36. Such a locking state of the clamp member 5 will be explained later in detail.

Furthermore, the clamp member 5 comprises an abutment portion 55 also formed in the upper portion of the clamp member 5. The abutment portion 55 is contactable with the tow ball so that a force can be transferred from the tow ball to the abutment portion 55. Accordingly, the abutment portion 55 corresponds to a force receiving member which is contactable with the tow ball 20.

As is shown in Figure 5A, the abutment portion 55 comprises a curved surface with a curvature substantially corresponding to the curvature of the tow ball. However, the shape of the abutment portion 55 is not limited to the shape shown in connection with the present embodiment. By contrast, the abutment portion can have any suitable shape as long as it is possible to establish a contact between the abutment portion 55 and the tow ball 20 and to transfer a desired force from the tow ball 20 to the clamp member 5. Since the abutment portion 55 is provided at a distance from the pivot axis A1 as shown in Figure 5A, a pushing force induced by contact and movement of the tow ball 20 leads to the generation of a rotational force about the pivot axis A1. Accordingly, the pushing force exerted on the abutment portion 55 of the clamp member 5 is transferred into a pivoting movement of the clamp member 5.

In the lower portion of the clamp member 5, there is provided a neck support surface 53 for establishing contact with a tow ball neck 21 of the coupling device 2. In order to provide a suitable contact area, the neck support surface 53 comprises a curvature substantially corresponding to the curvature of the outer surface of the tow ball neck 21.

As is further shown in Figure 5A, the clamp member 5 can additionally comprise an opening 54 through which an elastic member can be passed. The elastic member functions as a means for urging the lower portion of the clamp member 5 radially outward. This function will be described later.

Also, the clamp member 5 comprises a ball clamping surface 57 provided in the lower portion of the clamp member 5. Each clamp member 5 is arranged in cooperation with the ball retainer 3 in such a manner that the abutment portion 55, the ball clamping surface 57, the opening 54 and the neck support surface 53 are all oriented towards a center axis CL of the ball retainer 3, i.e. the later elements are all provided on the same side of the clamp member 5. In other words, when the clamp mechanism 1 is mounted on the coupling device 2, the ball clamping surface 57, the neck support surface 53, the abutment portion 55 and the opening 54 are all oriented towards the coupling device 2, more precisely towards the tow ball 20 and the tow ball neck 21, respectively. Therefore, the side of the clamp member 5 on which the latter four elements are provided is also referred to as the inner side of the clamp member 5. In accordance with the latter definition, the side of the clamp member 5 facing in the opposite direction is also referred to as the outer side of the clamp member 5.

The outer side of the clamp member 5 is shown in Figure 5B in greater detail. As is obvious from this figure, the opening 54 provided in the lower portion of the clamp member 5, as described above with respect to Figure 5A, extends from the inner side to the outer side of the clamp member 5 to its outer side. A force receiving surface 56 is provided on the outer side of the clamp member 5 at the lower portion thereof. In the present embodiment, the force receiving surface 56 is provided substantially at the same distance from the pivot axis A1 as the neck support surface 53. Such a configuration is however not strictly necessary and it is possible to provide the latter surfaces with a differing distance from the pivot axis A1. In either case, it is preferable if the force receiving surface 56 is provided remote from the pivot axis A1 for the following reason. The force receiving surface 56 is provided for receiving a tensioning force from the tensioning member 8. Therefore, it is preferable if the force receiving surface 56 is provided as far as possible from the pivot axis A1 in order to achieve a favorable leverage effect. As will be described later in greater detail, the ball clamping surface 57 is used to apply a clamping force on the tow ball 20 of the coupling device 2. In order to generate a suitable clamping force, it is desirable to provide the ball clamping surface 57 nearer to the pivot axis A1 than the force receiving surface 56.

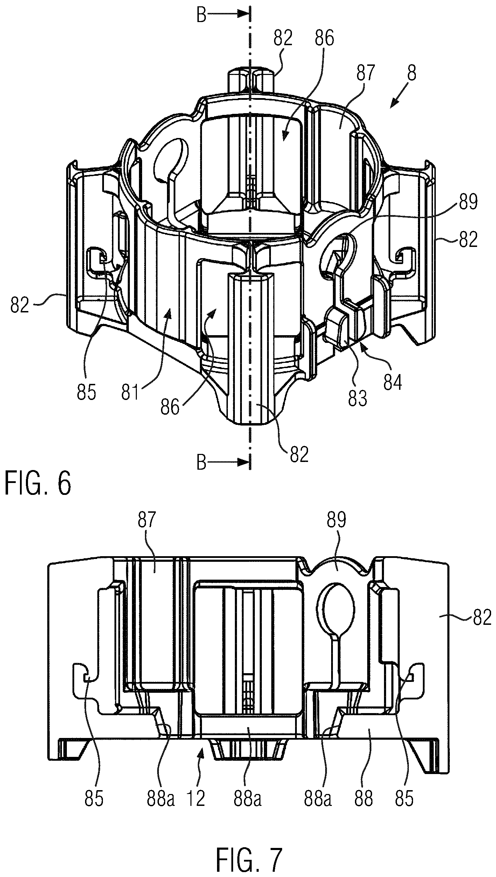

In the following, the construction of the tensioning member 8 is described with reference to Figures 6 and 7.

Figure 6 is an enlarged perspective view of the tensioning member 8 according to the present subject matter. The tensioning member comprises a main body 81 having substantially the shape of a hollow cylinder. Accordingly, the main body 81 comprises an inner surface and an outer surface. On the outer surface of the main body 81 guide portions 82 are provided equidistantly. Each of the guide portions 82 comprises an outer guide surface. The guide portions 82 are provided for slidably supporting the tensioning member 8 in the housing 4.

Furthermore, the tensioning member 8 comprises a force receiving section 83 for receiving a force from a force transmitting element 10 of the operating mechanism 6. More precisely, the tensioning member 8 comprises two force receiving sections 83 at opposite ends thereof. According to the present embodiment, each force receiving section 83 consists of two protrusions being arranged with a gap provided between them. The gap can also be referred to as cutout 84 and divides the lower portion of tensioning member 8 in two parts being connected by means of a bridging portion 89 provided in the upper portion of the main body 81 of the tensioning member 8 as shown in Figure 6. This configuration provides a certain flexibility of the lower portion of the tensioning member 8 so that upon applying a specific force on the force receiving section 83, more precisely on the two protrusions, the gap between the two protrusions can be reduced thereby deforming the tensioning member 8 such that the outer circumference of the lower portion is slightly reduced and the lower ends of the tensioning member are moved towards each other. As is obvious from the above, the tensioning member can be considered as an operating member according to the present subject matter which is operable by the operating mechanism.

As is further shown in Figure 6, four clamp openings 86 are provided at equal distance in the main body 81 of the tensioning member 8. More precisely, the clamp openings 86 are provided at positions where the guide portions 82 are located and radially inward from the same. The clamp openings 86 are formed so as to provide a sufficient space for accommodating the clamp members 5 therein. The guide portions 82 are formed such that each of them spans one clamp opening 86 in a direction substantially parallel to the axial extension direction of the tensioning member 8.

On the inner side of the guide portions 82, fixation portions 85 are provided for connecting a free end of an elastic member provided in the opening 54 of the clamp members 5 to the same. This will be described later in greater detail.

Moreover, the tensioning member 8 comprises ball retainer guide sections 87 which are formed so as to at least accommodate a portion of the leg portions 33 of the ball retainer 3 in a slideably movable manner. As is shown in Figure 6, the ball retainer guide sections 87 extend in a direction substantially parallel to the axial direction of the tensioning member 8. Accordingly, the ball retainer guide sections 87 are suitable for supporting the ball retainer 3 in an axially movable manner.

Figure 7 is a cross-sectional view of the tensioning member 8 shown in Figure 6 viewed in the direction of arrows B. More precisely, the cross-sectional view shown in Figure 7 is a cross section of the tensioning member 8 in a plane passing through the middle of the guide portions 82. As is shown in Figure 7, the guide portions 82 are integrally formed with the main body 81 of the tensioning member 8.

In the lower portion of the tensioning member 8, an opening 12 is provided for passing the tow ball therethrough. The opening 12 is formed by force application sections 88. The force application sections 88 are provided for contacting a force receiving surface 56 of a clamp member 5. The force application sections 88 comprise a sliding surface 88a contactable to the force receiving surface 56. The opening 12 is formed by the sliding surfaces 88. The sliding surface 88a of the force application section 88 is preferably designed corresponding to the shape of the force receiving surface 56 in order to provide a good force transfer and inclined with respect to the center axis CL. Furthermore, it is beneficial if the force receiving surface 56 and the sliding surface 88a of the force application section 88 are formed smooth so that a friction between the same is low. By this, it is possible to reliably transfer a movement of the tensioning member 8 in the axial direction into a pivoting movement of the clamp members 5.

Figure 8 shows the clamp mechanism 1 and the coupling device 2 in cross-sectional view. More precisely Figure 8 shows a state in which the clamp mechanism 1 is mounted on the coupling device 2 and is furthermore in a tensioned state meaning that the clamp members 5 are pressed against the tow ball 20 and the tow ball neck 21 by means of the tensioning member 8. In other words, Figure 8 shows a state in which a load carrier comprising such a clamp mechanism is mounted on a coupling device and ready to use. As is shown in this figure, the tow ball 20 contacts the ball support surface 37 at a first area 20a in the upper half of the tow ball 20 in Figure 8. Furthermore, the ball clamping surfaces 57 of the clamp members 5 contact the tow ball 20 at a second area 20b in the lower half of the tow ball 20 and a clamping force is exerted on the contact areas pushing the tow ball 20 against the ball support surface 37. By this, the necessary clamping force is achieved.

The mounting process of the load carrier 1 on the coupling 2 will be described in the following.

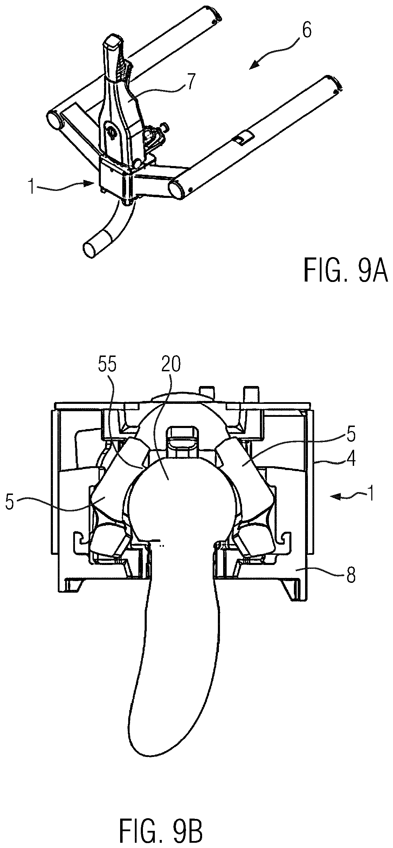

Figures 9A and 9B show an open state of the clamp mechanism 1 into which the tow ball 20 of the coupling device 2 is inserted. As is shown in Figure 9A, the operating mechanism 6 is in an initial state with the lever 7 being in a substantially vertical position. The operating mechanism 6 serves for actuating the tensioning member 8 for applying a tensioning force on the clamp members 5.

Additionally to the lever 7, the operating mechanism 6 comprises a force transmitting element 10 which is on the one hand coupled to the lever 7 and on the other hand coupled to the force receiving section 83 of the tensioning member. The operating mechanism 6 is constructed such that a movement of the lever 7 effects a movement of the tensioning member 8 in its axial direction. A detailed construction of the operating mechanism 6 will be described later and it will now be focused on the function of the clamp mechanism 1.

As is shown in Figure 9B, the clamp mechanism 1 is in a state in which the tensioning member 8 accommodated in the housing 4 is in a position in which a portion of the same protrudes from the housing 4 at the below end of the housing 4. The clamp members 5 are in an open position which means that the lower ends of the clamp members 5 are pivotably moved radially outward to a position in which the clamp members 5 allow the insertion of the tow ball 20 between them. Furthermore, in the state shown in Figure 9B, the tow ball 20 is already inserted through the opening formed in the lower portion of the force transmitting element 8 up to a position in which the upper surface of the tow ball 20 is in contact with the abutment portions 55 of the clamp members 5.

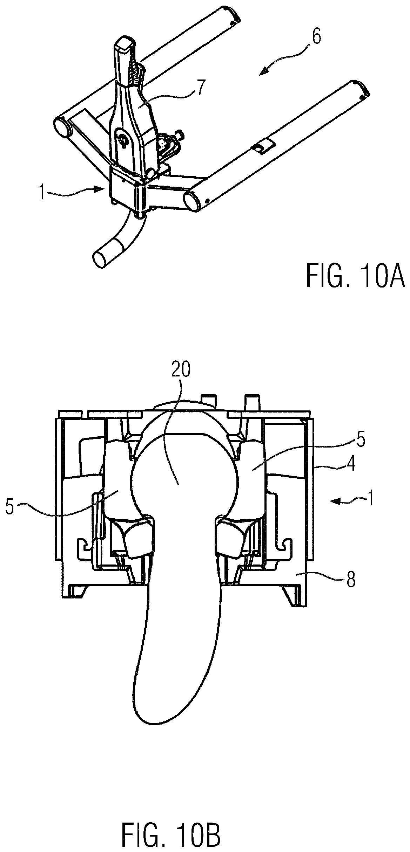

As is further shown in Figure 9B, a further movement of the tow ball 20 in the upward direction is only possible with a rotational movement of the clamp members 5. Thus, as a next step of the mounting process the clamp mechanism 1 is moved in the downward direction corresponding to a further insertion of the tow ball 20 in the upward direction in Figure 9B. More precisely, the clamp mechanism and the tow ball 20 are moved relatively to each other until the tow ball 20 is position in an intermediate position as shown in Figure 10B.

The intermediate position shown in Figure 10B is a position in which the clamp members 5 are pivotably rotated into a position in which the neck support surface 53 is in contact with the tow ball neck 21 and the ball clamping surface 57 is at least partially in contact with the second area of the tow ball 20, i.e. with the surface on the side of the tow ball neck. As is also shown in Figure 10B, the clamp members 5 have not only been pivoted about their pivot axes but have also been moved vertically, that is slightly upward in a direction of the center axis CL of the ball retainer 3 as can be seen from a comparison of Figures 9B and 10B. As is shown in Figure 10A, the operating mechanism is still not operated when the clamp mechanism 1 is in the intermediate position. Accordingly, since the operating mechanism 6 is not operated, the tensioning member 8 is also not moved and remains in the initial position shown in Figure 9B. However, as is shown in Figure 10B, the tow ball 20 is still not in contact with the ball support surface 37 of the ball retainer 3.

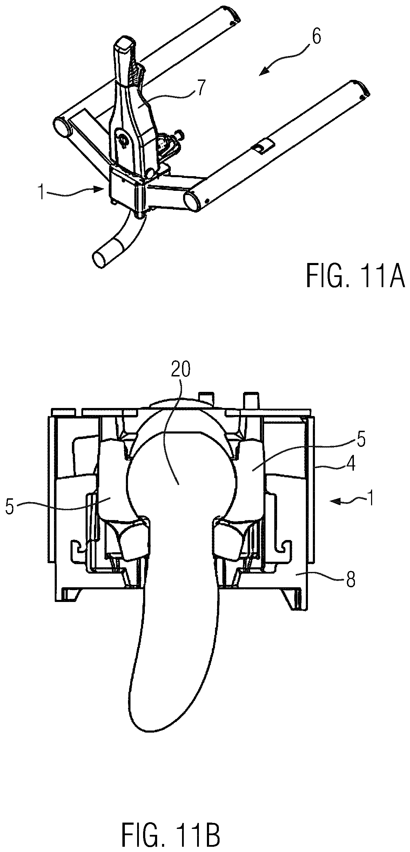

Figures 11A and 11B show a state of the clamp mechanism 1 in which the tow ball 20 is contacted to the ball support surface 37 of the ball retainer 3 at the first area. As is shown in Figure 11B, the tow ball 20 is inserted further in a vertically upward direction up to the position where it is in contact with the ball support surface 37. By this, the clamp members 5 are moved in the vertical upward direction up to a position in which the engagement portions 52 of the clamp members 5 are engaged with the recesses 36 of the ball retainer 3. The recesses 36 are formed such that a radially inner surface of the engagement portions 52 of the clamp members 5 is in contact with a surface of the recess facing radially outward. By this, a pivoting movement of the clamp members 5 is reliably blocked so that the movement of the neck support surfaces 53 radially outwards is not possible. By this construction, a condition is achieved in which a rotational movement of the clamp mechanism about the ball head can be prevented as much as possible due to the fact that a movement of the neck support surfaces 53 of the clamp members 5 in the radial outward direction is inhabited by the engagement of the engagement portions 52 with the recesses 36 of the ball retainer 3. Therefore, the position of the clamp members 5 with respect to the ball retainer 3 is also referred to as balancing position and the state of the clamp mechanism shown in Figures 11A and 11B is also referred to as balancing state in the following.

As can be gathered from Figure 11A, the operating mechanism 6 is still in the initial condition meaning that the lever 7 has not been operated so far. Therefore, the position of the tensioning member 8 still corresponds to the positions shown in Figures 9B and 10B.

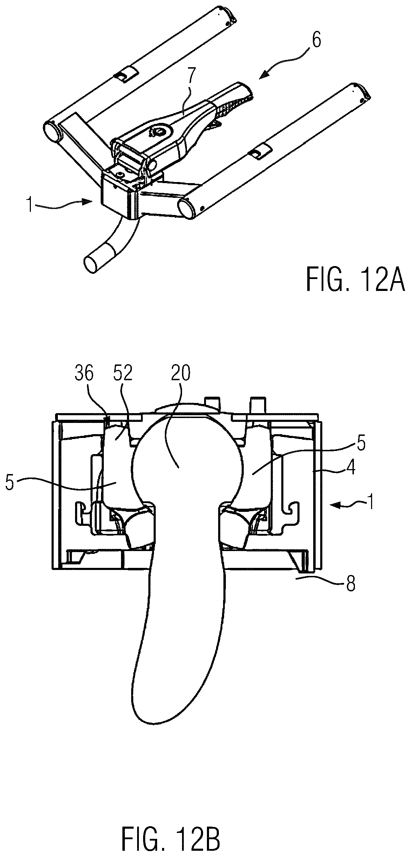

A mounted condition of the clamp mechanism 1 on the coupling device 2 is shown in Figures 12A and 12B. The condition of the clamp mechanism 1 in this state is also referred to as clamping state for the following reason. As is shown in Figure 12A, the lever 7 of the operating mechanism 6 is pivotably moved about 90 degrees. By this, the tensioning member 8 is axially moved in the vertical upward direction in Figure 12B up to a position in which it is almost fully accommodated in the housing 4. By this movement, the force application sections 88 of the force transmitting member 8 are brought into contact with the force receiving surfaces 56 of the clamp members 5. Since the sliding surfaces 88a of the force application sections 88 are inclined with respect to the center axis CL of the ball retainer 3, that is inclined with respect to a middle axis of the clamp mechanism 1, the movement in the axial direction of the tensioning member 8 results in the application of a force on the force receiving surfaces 56 in the radially inward direction. By this, the lower portions of the clamp members 5 are pushed radially inward so that a firm contact of the neck support surfaces 53 with the tow ball neck 21 as well as a firm contact between the ball clamping surfaces 57 with the second area of the tow ball neck is achieved. Consequently, a clamping force is generated pushing the tow ball 20 in the upward direction against the ball support surface 37 of the ball retainer 3.

The clamp mechanism as described before has the following advantages. First of all, the construction of the clamp mechanism 1 is very compact and space saving due to the pivotable arrangement of the clamp members 5. Furthermore, by supporting the clamp members 5 such that they are pivotably movable and axially movable in the axial (upward) direction, it is possible to establish a balancing state as described with reference to Figure 11B. As soon as the balancing state is achieved, the load carrier is stabilized by contact of the neck support surfaces 53 with the tow ball neck 21. Accordingly, whilst still in an untensioned state, the clamp mechanism 1 provides a stabilizing function preventing a rotational movement of the clamp mechanism 1 about the tow ball 20 and therefore prevents a rotational movement of the load carrier. Accordingly, the load carrier is in a stabilized state so that a user does not have to manually support or carry the load carrier while operating the operating mechanism 6 for tensioning the clamp mechanism 1.

While the mounting process of the clamp mechanism on the coupling device has been described before in detail, it is to be mentioned that the dismounting of the clamp mechanism from the coupling device is possible by carrying out the mounting steps in reverse order. Therefore, a detailed description of a dismounting process is omitted here.

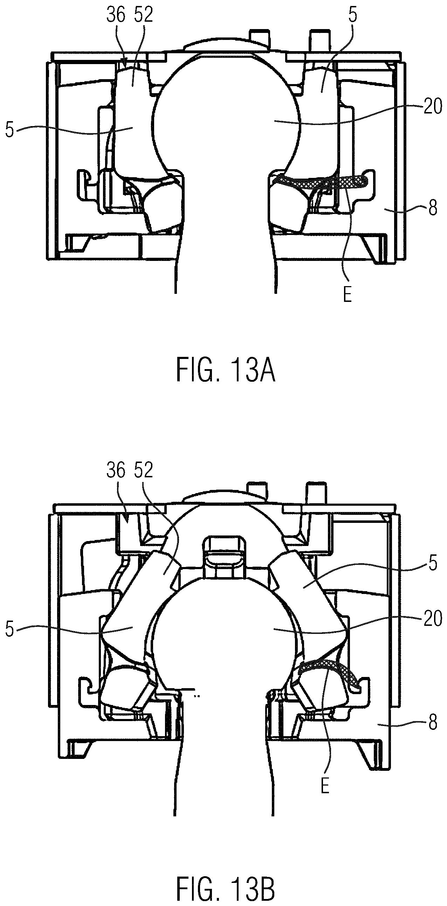

Figures 13A and 13B show constructions of the clamp mechanism 1 in which additionally to the elements as described before, an elastic member is provided in the opening 54 of the clamp members 5 and is connected to the fixation portion 85 of the tensioning member 8. The elastic member E is configured such that in the state as shown in Figure 13A, substantially no force is applied on the clamp members 5. Such a configuration is provided because a force application in this state would act against the tensioning force of the clamp members 5. On the other hand, the elastic member E is designed such that in the position shown in Figure 13B, a force is applied on the clamp members 5 pulling the lower ends of the clamp members towards the open position, i.e. radially outward. By using such elastic members E it is possible to reliably bring the clamp members 5 into the open position so that the insertion and removal of the tow ball 20 into and from the clamp mechanism 1 is easily possible.

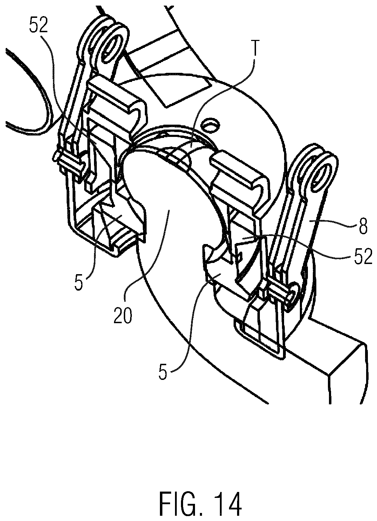

A further configuration slightly differing from the configurations of the clamp mechanism 1 as described so far is shown in Figure 14. More precisely, Figure 14 shows a clamp mechanism basically functioning in a similar way as described before. However, additionally to the elements described before, a clamp mechanism comprises a tow ball abutment element T in the form of a flexible element connecting the lower portions of the clamp members to each other. Accordingly, when the tow ball 20 is inserted into the clamp mechanism 1, the tow ball abutment element T gets into contact with the tow ball surface and is pushed vertically upwards leading to a movement of the clamp members in which the lower portions thereof carrying the neck support surfaces 53 are pulled radially inward and upward. Thus, providing such a tow ball abutment element can assist in pivoting the clamp members 5. On the other hand, providing such a tow ball abutment element can also function as a substitute of the abutment portions 55 of the clamp members 5 as described with respect to Figures 5A and 5B.

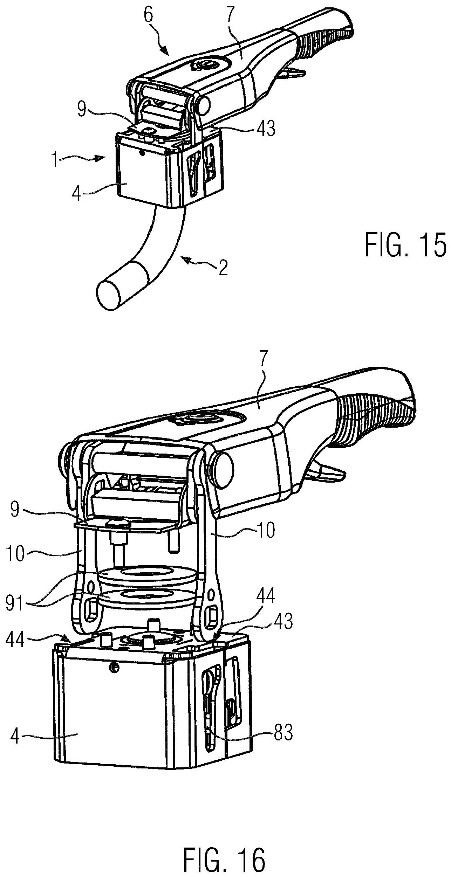

Figure 15 shows a clamp mechanism 1 with an operating mechanism 6 according to an embodiment of the present subject matter mounted thereon. The operating mechanism 6 comprises a lever 7 which in the view shown in Figure 15 is in a tensioning position. Characterizing for the tensioning position is that the lever according got the present embodiment extends in substantially horizontal direction and, due to its construction, transfers a force to the clamp mechanism which is transferred into the clamping force.

The construction and arrangement of the operating mechanism 6 is shown in Figure 16 in greater detail. Figure 16 shows an exploded view of the clamp mechanism 1 and the operating mechanism 6. Additionally to the lever 7, the operating mechanism 6 comprises a support 9 which is fixedly connectable to the upper portion 43 of the housing 4. As is further shown in Figure 16, disc springs 91 are provided between the support 9 and the upper portion 43 of the housing 4. The disc springs 91 are provided for compensating a stiffness in the system. The disc springs 91 are connected in parallel in order to increase the force necessary for deforming the same.

The operating mechanism 6 further comprises two force transmitting elements 10. Each force transmitting element 10 is connected to the operating mechanism 6 at one end and to the force receiving section 83 of the tensioning member 8 at the other end. When the operating mechanism 6 is mounted on the upper portion 43 of the housing 4, the force transmitting elements 10 are arranged so as to pass through openings 44 provided in the upper portion 43 of the housing 4. By this, it is possible to connect the force transmitting elements 10 to the respective force receiving sections 83 of the tensioning member 8 which is accommodated in the housing 4.

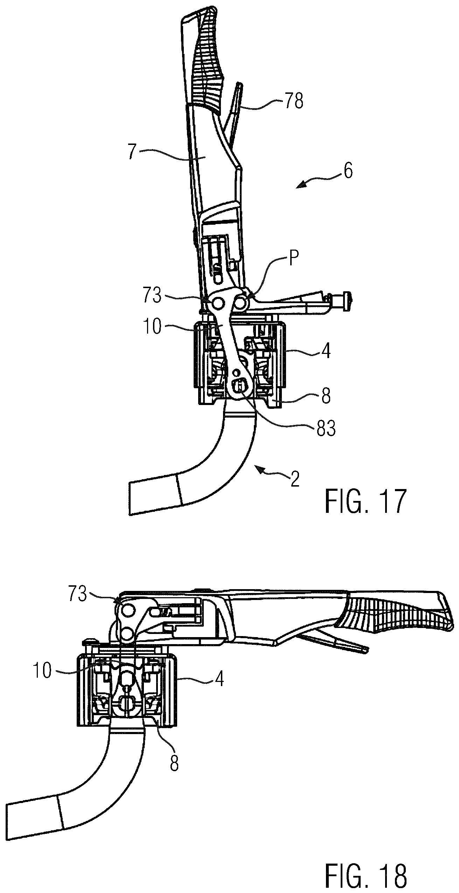

More detailed views of the operating mechanism 6 as well as the connection of the same to the tensioning member 8 by means of the force transmitting elements 10 are shown in Figures 17 and 18. Figure 17 shows an untensioned state of the operating mechanism 6 in which the lever 7 extends in substantially vertical direction. Figure 18 shows a tensioned state of the operating mechanism 6 in which the lever 7 extends substantially in horizontal direction. In both figures, the clamp mechanism 1 as well as a part of the lever 7 are shown in sectional view. Furthermore, in Figure 18, the force transmitting element 10 is shown transparent.

As is shown in Figures 17 and 18, the force transmitting element 10 is connected to the lever 7 at a force application joint 73 at one end and connected to the force receiving section 83 of the tensioning member 8 at its other end. The portion of the force transmitting element 10 at which the same is connected to the force receiving section 83 is also referred to as force application section F.

The lever 7 is supported against the support 9 about a pivot P. Accordingly, when the lever 7 is rotated in the clockwise direction from a position shown in Figure 17 into the position shown in Figure 18, the force application joint 73 is also moved about the pivot P. due to the construction of the clamp mechanism and the connection of the force transmitting element 10 to the tensioning member 8, the rotational movement of the lever 7 is transferred into a linear movement of the tensioning member 8. A more detailed description of the operating mechanism 6 will be given in the following.

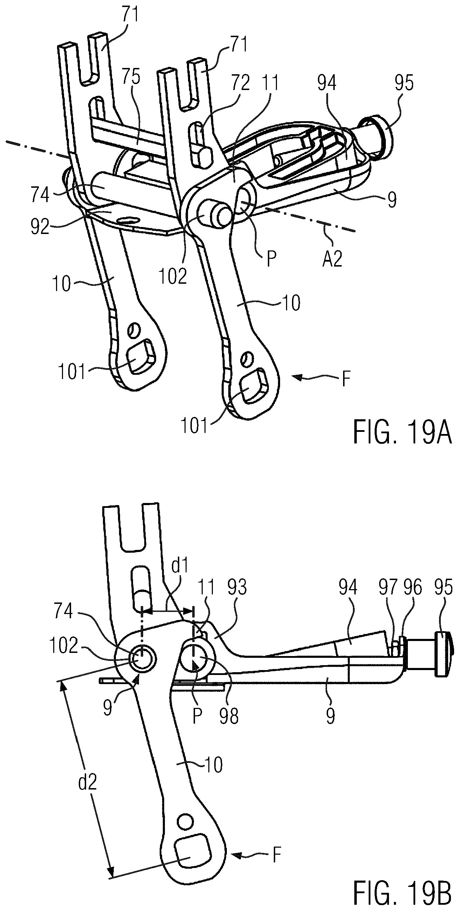

Figures 19A and 19B show a perspective view and a side view of core elements of the operating mechanism 6, respectively. As is shown in Figure 19A, the operating mechanism 6 comprises a lever portion 71, which, as shown in Figure 17, is connected to the lever 7. While the lever portion 71 is shown as a separate element here, this lever portion 71 can also be integrally formed with the lever 7. The lever portion 71 comprises a substantially flat shape and can be made of a sheet metal for instance. The lever portion 71 comprises a recess 72 in which a portion of an engaging member 75 is accommodated. The engaging member 75 comprises dimensions allowing the same to slidably move in the recess 72. The lever portion 71 is rotatably supported on the support 9 via the pivot P. In the present embodiment, the pivot P is realized by means of a pivot pin 98 accommodated in an opening of the lever portion 71. The construction of the pivot pin 98 as well as its arrangement on the support 9 will be described later. Accordingly, a construction is achieved in which the lever portion 71 is pivotable about the pivot pin 98.

As is also shown in Figures 19A and 19B, the force application joint 73 is provided at a predetermined distance from the pivot pin 98. This predetermined distance will be referred to as pivotal distance d1 in the following. In the present embodiment the force application joint 73 comprises a force application pin 74. Thus, the pivotal distance d1 can be considered as the distance between the center lines of the pivot pin 98 and the force application pin 74.

The force application section F of the force transmitting element 10 is provided at a predetermined distance from the force application joint 73. This distance will also be referred to as pivotal distance d2 in the following. More precisely, the force application section F of the force transmitting element 10 comprises a first opening 101 into which the force receiving section 83 of the clamp mechanism 1 can be inserted. Furthermore, the force transmitting element 10 comprises a second opening 102 into which the force application pin 74 is inserted. Thus, the pivotal distance d2 can be considered as the distance between the center axis of the force application pin 74, that is the middle of the second opening 102, and the middle of the first opening 101 of the force application section F.

As is shown in the figures, the pivotal distance d2 is larger than the pivotal distance d1. In the present embodiment, the tensioning member 8 is movably arranged in direction substantially perpendicular to the support 9 of the operating mechanism 6. Since the force application section F is connected to the force receiving section 83 of the tensioning member 8, the center of the first opening 101 moves on an axis substantially parallel to the center axis CL of the ball retainer 3. Accordingly, upon moving the lever portion 71, the distance between the force application section F and the support 9 is changed.

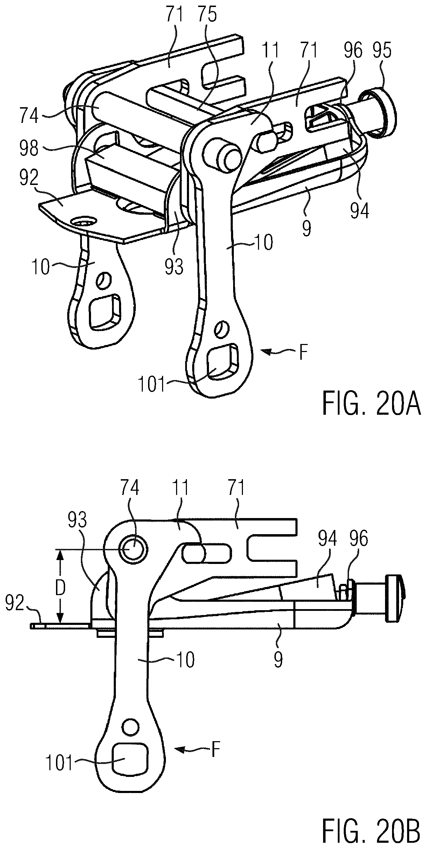

Figures 20A and 20B show the main parts of the operating mechanism 6 as described with respect to Figures 19A and 19B wherein the lever 7 and the lever portion 71 are in a tensioning position. In this tensioning position, the force application joint 73 and consequently also the force application pin 74 are positioned at a distance D from the support. According to the present embodiment, the distance D is presettable by means of an adjustment means.

The adjustment means comprises a spacing means. The spacing means comprises a wedge element 94, an operating member 95 and a screw 97. The wedge element 94 is supported on an upper surface of a base portion 92 of the support 9. On an upper surface of the wedge element 94 which is inclined with respect to the base portion 92 of the support 9, the pivot pin 98 is slidably arranged. In other words, the wedge element 94 is arranged between the pivot pin 98 and the upper surface of the base portion 92 of the support 9. Furthermore, the wedge element 94 is horizontally movably arranged on the support 9. In order to effect the movement of the wedge element 94, an operating member 95 is rotatably arranged on a rear wall 96 of the support 9. The operating member 95 is connected to the wedge element 94 by means of a screw 97 in such a manner that a rotation of the operating member 95 leads to a movement of the wedge element 94 in the axial direction of the screw 97. Accordingly, by this arrangement, it is possible to adjust the position of the wedge element 94 with respect to the pivot pin 98.

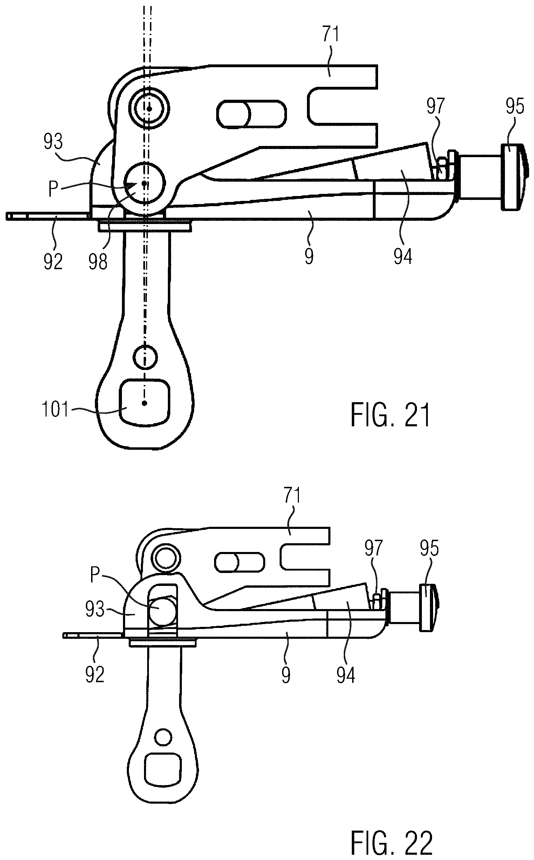

Since the upper surface of the wedge element 94 is inclined with respect to the base portion 92 of the support 9, a movement of the wedge element 94 towards the pivot pin 98 results in a movement of the pivot pin 98 in a direction facing away from the support. In other words, the distance between the pivot pin 98 and the support 9 is changed. In order to provide such a movement of the pivot pin 98, the support 9 comprises side walls 93 having guiding grooves extending in substantially perpendicular direction to the base portion 92 of the support 9. The side walls of the support 9 as well as the guiding grooves formed therein are best seen in Figure 22 which shows a side view of the operating mechanism 6, in which the force transmitting element 10 and the lever portion 71 shown in Figures 19A and 20A in the front are omitted in order to give a clear view on the construction of the support 9. Advantageously, the support 9 is formed from pressing a sheet metal into the desired shape.

As is further shown in Figures 19A, 19B, 20A and 20B, the engaging member 75 is moved under an abutment portion 11 formed in the upper end of the force transmitting element 10 when the lever portion 71 is in the tensioning position. The abutment portion 11 functions as a stop so that - as soon as the engaging member 75 is positioned under the abutment portion 11 as shown in Figures 19B and 20B - a movement of the lever portion 71 is blocked. In order to release the locking, an operating member operable by the user is provided in the lever 7.

As is shown in Figure 21, the force application joint 73, more precisely, the center of the force application pin 74 is in the tensioning state of the operating mechanism 6 arranged with a small distance from a plane spanned by the pivot axis A2 of the pivot pin 98 and a connecting line between the center of the pivot pin 98 and the center of the first opening 101. Due to this, a rotational force is generated about the pivot P urging the lever portion 71 towards the tensioning position. Accordingly, the construction comprises a self locking function in which the lever portion 71 will remain in the tensioning position unless a force is applied on the lever 7 overcoming the force urging the lever in the tensioning position.

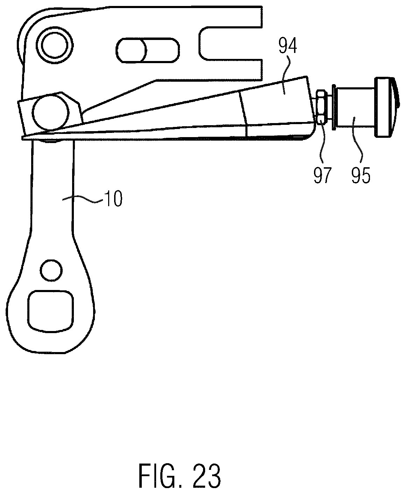

Figure 23 shows a further view of the adjustment means as provided in the present embodiment. More precisely, in the view shown in Figure 23, the support 9 as well as the force transmitting element 10 and the lever portion 71 shown in Figures 19A and 19B in the front are omitted. As is shown in Figure 23, the pivot pin 98 comprises an angular section formed in the middle portion of the same and two circular sections formed at opposite ends of the angular section. The middle portion of the pivot pin 98 comprises a flat lower section which is in contact with the upper surface of the wedge element 94. Accordingly, when the wedge element 94 is moved relative to the pivot pin 98, the lower flat surface of the middle portion rides on the upper surface of the wedge element 94. With such a construction, a reliable adjustment function for adjusting the distance of the pivot pin 98 with respect to the support 9 is achieved.

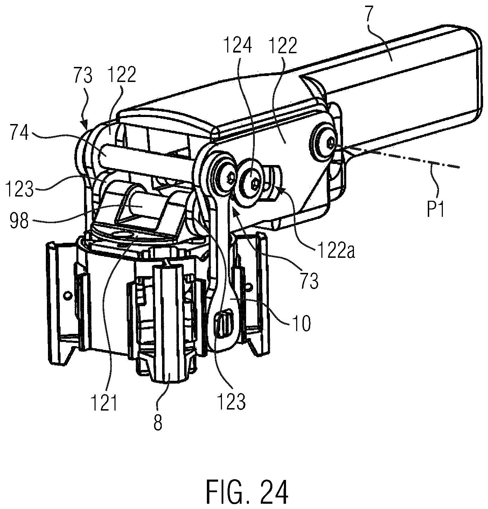

In the operating mechanism 6 described so far, the presettable distance D at which the force application joint 73 is positioned with respect to the support 9 in the tensioning state is adjustable by adjusting the distance between the pivot P and the support. However, it is also possible to adjust the presettable distance D by means of changing the pivotal distance d1. Therefore, an alternative embodiment showing an adjustment means in which the pivotal distance d1 is changed will be described with reference to Figure 24 to 27.

As is shown in Figure 24, the alternative operating mechanism also comprises a lever 7, a force transmitting element 10 connected to a force application join 73 by means of a force application pin 74. The alternative operating mechanism is connected to the tensioning member 8 by means of the force transmitting element 10.

The alternative operating mechanism comprises a first adjusting portion 122 which comprises a plate like shape. A second adjusting portion 123 which also comprises a plate like shape is arranged right next and parallel to the first adjusting portion 122. The first adjusting portion 122 and the second adjusting portion 123 are pivotably movable with respect to each other about a pivot axis P1. In the alternative operating mechanism shown in Figure 24, the second adjusting portion 123 is fixedly and non-rotatably coupled to the lever 7.

The force application joint 73, more precisely the force application pin 74, is coupled to the first adjusting portion 122. The pivot pin 98 is coupled to the second adjusting portion 123 thereby pivotably supporting the second adjusting portion 123 and the lever 7 about the same. In the construction shown in Figure 24, the first adjusting portion 122 and the second adjusting portion 123 are pivotably movably arranged about the pivot axis P1 at a first end of the same. At the opposite ends of the first adjusting portion 122 and the second adjusting portion 123, the force application pin 74 and the pivot pin 98 are coupled, respectively. Consequently, when the first adjusting portion 122 is pivoted with respect to the second adjusting portion 123 about the pivot axis P1, the pivotal distance d1 between the force application joint 73 and the pivot pin 98 is changed.

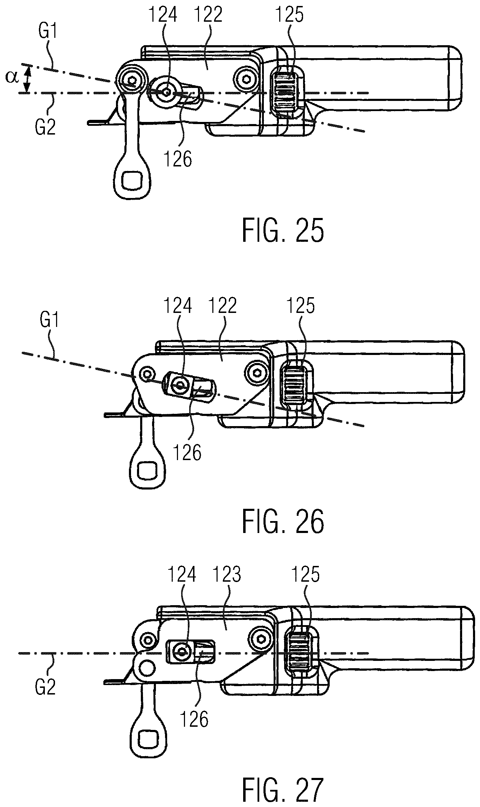

In order to effect such a movement of the first adjusting portion 122 about the pivot axis P1, the first adjusting portion 122 comprises a first guiding track 122a and the second adjusting portion 123 comprises a second guiding track 123a. In the present embodiment, both guiding tracks are elongate straight grooves formed in the respective adjusting portions. More precisely, the first guiding track 122a extends along a first guiding track axis G1 and the second guiding track 123a extends along a second guiding track axis G2 as is shown in Figure 26 and 27, respectively. Figures 26 and 27 are side views of the alternative operating mechanism wherein the first adjusting portion 122 which is shown in front of the second adjusting portion 123 and therefore masks the same in Figure 26 is removed in Figure 27.

The first guiding track 122a and the second guiding track 123a, more precisely, the first guiding track axis G1 and the second guiding track axis G2 are inclined with respect to each other at an angle α as is shown in Figure 25 showing an overlay of both guiding track axes. An adjusting pin 124 is movably guided in both guiding tracks 122a and 123a. Consequently, a movement of the adjusting pin 124 is transferred into a pivoting movement of the first adjusting portion 122 with respect to the second adjusting portion 123 about the pivot axis P1.

In order to effect a movement of the adjusting pin 124 and consequently a rotational movement of the first adjusting portion 122, the alternative operating mechanism further comprises a threaded rod 126 which is inserted into a corresponding threaded opening formed in the adjusting pin 124 with one end. The other end of the threaded rod 126 is connected to an operating portion 125 which in the present embodiment is a rotatable wheel which can be rotated by a user. Furthermore, the threaded rod 126 is rotatably but axially non movably held in the operating mechanism. Due to this construction, a rotational movement of the threaded rod 126 is possible by operating the operating portion 125 and the rotation of the threaded rod 126 is transferred into a shifting movement of the adjusting pin 124 in the axial direction of the threaded rod 126. By this, the adjusting rod 124 is moved in the guiding tracks 122a and 123a leading to a pivotal movement of the first adjusting portion 122 with respect to the second adjusting portion 123 about the pivot axis P1. Accordingly, a simple and reliable mechanism for adjusting the pivotal distance d1 is provided.

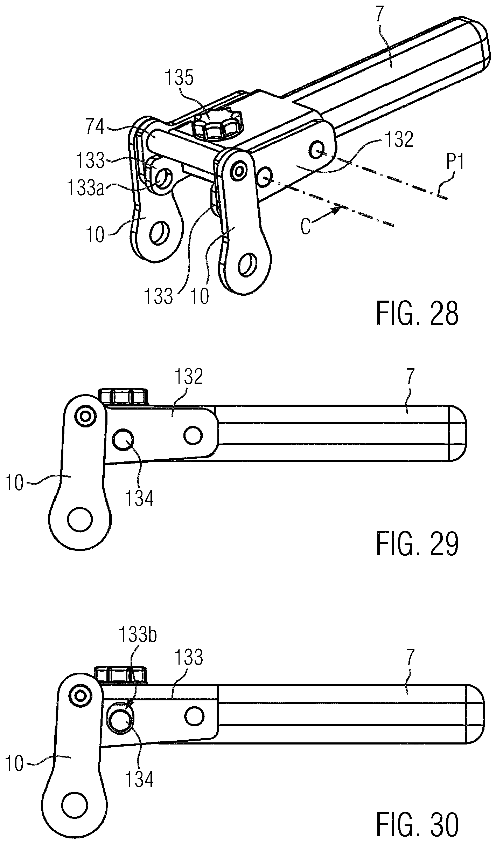

A modification of the alternative embodiment shown in Figure 24 is described with reference to Figures 28 to 31. As is the case in the embodiment shown in Figure 24, the adjustment means according to the modification shown in Figure 28 comprises a first adjusting portion 132 and a second adjusting portion 133 which are arranged pivotably movable with respect to each other about a pivot axis P1. In the arrangement shown in Figure 28, the second adjusting portion 133 is integrally formed with the lever 7. The force application pin 74 is connected to the first adjusting portion 132 and an opening 133a is provided in the second adjusting portion 133 for accommodating the pivot pin 98 therein. The first adjusting portion 132 is coupled to an adjusting pin 134 arranged movably with respect to the second adjusting portion 133.

According to the construction shown in Figures 28 to 31, the adjusting pin 134 extends through an opening 133b provided in the second adjusting portion 133 and is fixedly connected to the first adjusting portion 132. The opening 133b is best seen in Figure 30. The opening 133b provided in the second adjusting portion 133 is dimensioned such that a sufficient movement of the adjusting pin 134 with respect to the second adjusting portion 133 is possible.

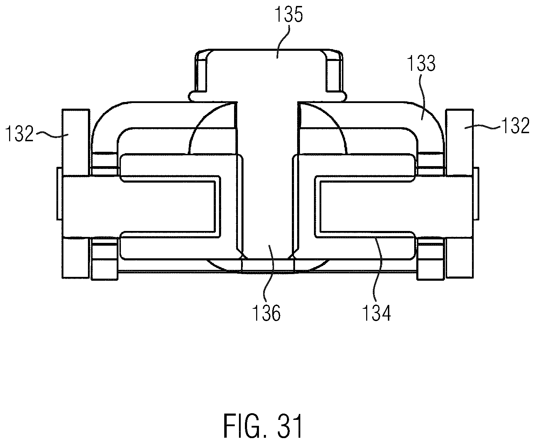

In order to move the adjusting pin 134, the adjusting means comprises an operating member 135 provided on an upper portion of the lever 7. A screw 136 which extends into a threaded opening provided in the adjusting pin 134 is connected to the operating member 135 and thereby rotatably but axially non movable supported on the lever. Consequently, by rotating the operating member 135, the screw 136 is rotated as well and the rotation of the screw is transferred into a movement of the adjusting pin 134 in the axial direction of the screw 136. Thus, as can be gathered from Figure 31, a rotation of the operating member 135 results in a movement of the adjusting pin 134 towards and away from the upper portion of the lever 7. As is also shown in Figure 31, the second adjusting portion 133 is integrally formed with the lever 7. Accordingly, a movement of the adjusting pin 134 is provided relative to the second adjusting portion 133 thereby effecting a pivoting movement of the first adjusting portion 132 with respect to the second adjusting portion 133 about the pivot axis P1. Consequently, a simple mechanism for adjusting the pivotal distance d1 between the force application joint 73 and the pivot P is achieved.

Thus, a load carrier with an operating mechanism is provided which allows for an easy adjustment of the tensioning force generated in a clamp mechanism.

**REFERENCE SIGNS**

| | | | |
|---|---|---|---|
| 1 | clamp mechanism | 6 | operating mechanism |
| | | | |
| 2 | coupling device | 7 | lever |
| 20 | tow ball | 71 | lever portion |
| 20a | first area | 72 | recess |
| 20b | second area | 73 | force application joint |
| 21 | tow ball neck | 74 | force application pin |
| | | 75 | engagement member |
| 3 | ball retainer | | |
| 31 | support portion | 8 | tensioning member |
| 32 | leg portion | 81 | main body |
| 33 | leg portion | 82 | guide portions |
| 34 | clamp member spaces | 83 | force receiving section |
| 35 | sliding surface | 84 | cutout |
| 36 | recesses | 85 | fixation portions |
| 37 | ball support surface | 86 | clamp openings |
| | | 87 | ball retainer guide sections |
| 4 | housing | 88 | force application sections |
| 41 | load carrying means | 88a | sliding surface |
| 42 | load carrying means | 89 | bridging portion |
| 43 | upper portion | | |
| 44 | openings | 9 | support |
| | | 91 | disc spring |
| 5 | clamp members | 92 | base portion |
| 51 | protrusions | 93 | side walls |
| 52 | engaging portion | 94 | wedge element |
| 53 | neck support surface | 95 | operating member |
| 54 | openings | 96 | rear wall |
| 55 | abutment portion | 97 | screw |
| 56 | force receiving surface | 98 | pivot pin |
| 57 | ball clamping surface | | |
| | | 10 | force transmitting element |
| 101 | first opening | T | tow ball abutment element |
| 102 | second opening | | |
| | | | |
| 11 | abutment portion | | |
| 12 | opening | | |
| 122 | first adjusting portion | | |
| 122a | first guiding track | | |
| 123 | second adjusting portion | | |
| 123a | second guiding track | | |
| 124 | adjusting pin | | |
| 125 | operating portion | | |
| 126 | threaded rod | | |
| | | | |
| 132 | first adjusting portion | | |
| 133 | second adjusting portion | | |
| 133a | opening | | |
| 133b | opening | | |
| 134 | adjusting pin | | |
| 135 | operating member | | |
| 136 | screw | | |
| | | | |
| A1 | pivot axis of clamp member | | |
| A2 | pivot axis of pivot pin / hinge axis | | |
| CL | center axis | | |
| D | distance | | |
| d1 | pivotal distance | | |
| d2 | pivotal distance | | |
| E | elastic members | | |
| F | force application section | | |
| G1 | first guiding track axis | | |
| G2 | second guiding track axis | | |
| L | load carrier | | |
| P | pivot | | |
| P1 | pivot axis in adjusting mechanism | | |

## Claims

1. Load carrier (L) with an operating mechanism (6) for operating a clamp mechanism (1), the operating mechanism (6) comprising
a lever (7) pivotably supported on a support (9) about a pivot (P) and configured to be operated by a user to actuate the clamp mechanism (1),
a force application joint (73) connected to said lever (7),
wherein in a tensioning position of the lever (7), the force application joint (73) is positioned at a presettable distance (D) from said support (9),
a force transmitting element (10) pivotably connected to said force application joint (73),
**characterized in that**
said force transmitting element (10) is pivotably connected to an operated member of said clamp mechanism (1) at a force application section (F) for applying a force on said operated member, wherein a pivotal distance (d1) between said force application joint (73) and said pivot (P) is smaller than a pivotal distance (d2) between said force application joint (73) and said force application section (F), and **in that** said load carrier (L) further comprises an adjustment means for presetting said presettable distance (D) between said force application joint (73) and said support (9) in order to adapt said tensioning force on said operated member.

2. Load carrier according to claim 1, wherein said pivot comprises a pivot axis (A2).

3. Load carrier according to claim 2, wherein said pivot axis (A2) is arranged stationary.

4. Load carrier according to claim 2, wherein said pivot axis (A2) is guided such that the shortest distance between said pivot axis (A2) and said support (9) is variable.

5. Load carrier according to one of claim 2 to 4, further comprising a pivot pin (98) defining said pivot axis (A2).

6. Load carrier according to one of claims 1 to 5, wherein said adjustment means comprises a means for adjusting the pivotal distance (d1) between said pivot (P) and said force application joint (73).

7. Load carrier according to claim 6, further comprising an adjusting means with a first adjusting portion (122; 132) and a second adjusting portion (123; 133) arranged pivotably movable with respect to each other about a pivot axis (P1), wherein said force application joint (73) is coupled to said first adjusting portion (122; 132) and said hinge axis (A2) is coupled to said second adjusting portion (123; 133), and an adjusting mechanism for effecting the movement of said first and second adjusting portions with respect to each other so as to adjust said pivotal distance (d1) between said hinge axis (A2) of said lever (7) and said force application joint (73), wherein preferably said second adjusting portion is fixed on or integrally formed with said lever (7).

8. Load carrier according to claim 7, wherein said first adjusting portion (122) comprises a first guiding track (122a) and said second adjusting portion (123) comprises a second guiding track (123a), and wherein said adjusting mechanism comprises a pin (124) guided in said first and said second guiding tracks so that a movement of the pin (124) effects a movement of said first and second adjusting portions with respect to each other about said common pivot axis (P1).

9. Load carrier according to claim 8, wherein said adjusting mechanism comprises a threaded rod (126) coupled to said lever (7) at one end and said pin (124) comprises a threaded opening, wherein said pin (124) is mounted on the other end of said threaded rod (126) with the threaded rod passed through said opening so that said pin (124) is movable in the longitudinal direction of said threaded rod (126) upon rotation of the same, wherein said threaded rod (126) comprises an operating portion (125) for rotating said threaded rod (126).

10. Load carrier according to one of claims 8 and 9, wherein each of said first and second adjusting portions comprise a plate and each of said first and second guiding tracks comprise a groove formed in said plates, wherein said grooves are preferably straight and wherein said first guiding track is inclined with respect to said second guiding track.

11. Load carrier according to claim 7, wherein said adjusting mechanism comprises a force application element (134) pivotably connected to said first adjusting portion (132) and movably arranged with respect to said second adjusting portion (133), wherein the force application element preferably extends through an opening provided in said second adjusting portion (133), said opening (133b) having a dimension allowing a free movement of the force application element (134), and wherein said adjusting mechanism preferably further comprises an actuating means for effecting said movement of said force application element (134), said actuating means preferably comprising a screw (136) engaging with said force application element (134) and said lever (7) such that a rotational movement of said screw (136) is transferred into a movement of the force application element (134) with respect to the second adjusting portion (133) in the longitudinal direction of the screw.

12. Load carrier according to one of claims 1 to 11, wherein said adjustment means comprises a spacing means for adjusting the distance between said pivot (P) and said support (9).

13. Load carrier according to claim 12, wherein said spacing means comprises a wedge (94) supporting said pivot (P) on one side and contacting said support (9) on the opposite side, said wedge (94) being movably arranged between said pivot (P) and said support (9).

14. Load carrier according to one of the preceding claims, further comprising a locking means for releasably locking the movement of the lever (7), said locking means having an engaging member (75) engageable with an engaging portion (11) formed on said force transmitting element (10).

15. Load carrier according to one of the preceding claims, further comprising said clamp mechanism (1), wherein said clamp mechanism (1) is mountable to a coupling device having a tow ball (20) supported by a tow ball neck (21), and said operated member is adapted for directly or indirectly applying a clamping force on said coupling device, said operated member being operatively coupled to said lever (7) by said force transmitting element (10) which is preferably pivotably connected to said force application joint (73) and which is preferably pivotably connected to said operated member at said force application section (F), wherein said support (9) of said operating mechanism is coupled to said clamp mechanism (1) preferably with at least one disc spring (91) being arranged between said support (9) and said housing (4).

16. Load carrier according to claim 15, wherein said clamp mechanism further comprises a ball retainer having a ball support surface contactable at least to a first area of said tow ball located opposite to said tow ball neck, and wherein said operated member comprises at least one clamp member having a ball clamping surface contactable at least to a second area of said tow ball located on the side of said tow ball neck.

17. Load carrier according to claim 15, wherein said clamp mechanism further comprises
a ball retainer (3) having a ball support surface (37) contactable at least to a first area (20a) of said tow ball (20) located opposite to said tow ball neck (21),
at least one clamp member (5) having a ball clamping surface (57) contactable at least to a second area (20b) of said tow ball (20) located on the side of said tow ball neck (21), wherein
said operated member interacts with each of said at least one clamp members (5) such that by applying a force to said operated member, a clamping force acting between said ball support surface (37) and said ball clamping surfaces (57) to said tow ball (20) is achievable.

18. Load carrier according to claim 17, wherein said clamp mechanism comprises at least two clamp members (5) being distributed about a center axis (CL) of said ball support surface (37), wherein each of said clamp members (5) is movably arranged with respect to said ball retainer (3), wherein said operated member comprises a tensioning member (8) arranged movably along the direction of said center axis (CL) with respect to said ball retainer (3).

19. Load carrier according to claim 18, wherein by an interaction between said tensioning member (8) and said at least two clamp members (5), a movement of said at least two clamp members (5) towards said ball support surface (37) of said ball retainer (3) is achievable.

20. Load carrier according to claim 18 or 19, wherein by an interaction of said tensioning member (8) and said at least two clamp members (5), a movement of said tensioning member (8) along the direction of said center axis (CL) is at least partially transformed into a movement of said at least two clamp members (5) towards said center axis (CL).

## Patentansprüche

1. Lastenträger (L) mit einem Betätigungsmechanismus (6) zum Betätigen eines Spannmechanismus (1), wobei der Betätigungsmechanismus (6) umfasst:
einen Hebel (7), der um einen Gelenkpunkt (P) schwenkbar auf einer Halterung (9) gehalten ist und so konfiguriert ist, dass er von einem Benutzer betätigt wird, um den Spannmechanismus (1) zu bedienen,
ein Kraftanwendungsgelenk (73), das mit dem Hebel (7) verbunden ist,
wobei in einer Spannposition des Hebels (7) das Kraftanwendungsgelenk (73) in einem vorab einstellbaren Abstand (D) von der Halterung (9) positioniert ist,
ein Kraftübertragungselement (10), welches schwenkbar mit dem Kraftanwendungsgelenk (73) verbunden ist,
**dadurch gekennzeichnet, dass**
das Kraftübertragungselement (10) an einem Kraftanwendungsabschnitt (F) zum Anwenden einer Kraft auf ein betätigtes Element des Spannmechanismus (1) schwenkbar mit dem betätigten Element Spannmechanismusverbunden ist, wobei ein Schwenkabstand (d1) zwischen dem Kraftanwendungsgelenk (73) und dem Gelenkpunkt (P) geringer ist als ein Schwenkabstand (d2) zwischen dem Kraftanwendungsgelenk (73) und dem Kraftanwendungsabschnitt (F), und dass der Lastenträger (L) ferner ein Einstellungsmittel zum Vorab-Einstellen des vorab einstellbaren Abstands (D) zwischen dem Kraftanwendungsgelenk (73) und der Halterung (9) umfasst, um die Spannkraft auf dem betätigten Element anzupassen.

2. Lastenträger nach Anspruch 1, wobei der Gelenkpunkt eine Schwenkachse (A2) umfasst.

3. Lastenträger nach Anspruch 2, wobei die Schwenkachse (A2) stationär angeordnet ist.

4. Lastenträger nach Anspruch 2, wobei die Schwenkachse (A2) so geführt ist, dass der kürzeste Abstand zwischen der Schwenkachse (A2) und der Halterung (9) variabel ist.

5. Lastenträger nach einem der Ansprüche 2 bis 4, ferner umfassend einen Gelenkbolzen (98), welcher die Schwenkachse (A2) definiert.

6. Lastenträger nach einem der Ansprüche 1 bis 5, wobei das Einstellungsmittel ein Mittel zum Einstellen des Schwenkabstands (d1) zwischen dem Gelenkpunkt (P) und dem Kraftanwendungsgelenk (73) umfasst.

7. Lastenträger nach Anspruch 6, ferner umfassend ein Einstellungsmittel mit einem ersten Einstellungsteil (122; 132) und einem zweiten Einstellungsteil (123; 133), welche in Bezug zueinander um eine Schwenkachse (P1) schwenkbar sind, wobei das Kraftanwendungsgelenk (73) mit dem ersten Einstellungsteil (122; 132) verbunden ist und die Scharnierachse (A2) mit dem zweiten Einstellungsteil (123; 133) verbunden ist, und einen Einstellungsmechanismus zum Bewirken der Bewegung des ersten und zweiten Einstellungsteils in Bezug zueinander, um den Schwenkabstand (d1) zwischen der Scharnierachse (A2) des Hebels (7) und dem Kraftanwendungsgelenk (73) einzustellen, wobei vorzugsweise der zweite Einstellungsteil an dem Hebel (7) befestigt oder einstückig mit diesem ausgebildet ist.

8. Lastenträger nach Anspruch 7, wobei der erste Einstellungsteil (122) eine erste Führungsschiene (122a) umfasst und der zweite Einstellungsteil (123) eine zweite Führungsschiene (123a) umfasst und wobei der Einstellungsmechanismus einen Bolzen (124) umfasst, der so in der ersten und zweiten Führungsschiene geführt ist, dass eine Bewegung des Bolzens (124) eine Bewegung des ersten und zweiten Einstellungsteils in Bezug zueinander um die gemeinsame Schwenkachse (P1) bewirkt.

9. Lastenträger nach Anspruch 8, wobei der Einstellungsmechanismus eine Gewindestange (126) umfasst, die an einem Ende mit dem Hebel (7) verbunden ist, und der Bolzen (124) eine Gewindeöffnung umfasst, wobei der Bolzen (124) an dem anderen Ende der Gewindestange (126) montiert ist, wobei die Gewindestange durch die Öffnung geführt ist, so dass der Bolzen (124) durch eine Drehung der Gewindestange (126) in der Längsrichtung derselben bewegbar ist, wobei die Gewindestange (126) einen Betätigungsteil (125) zum Drehen der Gewindestange (126) umfasst.

10. Lastenträger nach einem der Ansprüche 8 und 9, wobei jeder des ersten und zweiten Einstellungsteils eine Platte umfasst und jede der ersten und zweiten Führungsschiene eine in den Platten ausgebildete Nut umfasst, wobei die Nuten vorzugsweise geradlinig sind und wobei die erste Führungsschiene in Bezug auf die zweite Führungsschiene schräggestellt ist.

11. Lastenträger nach Anspruch 7, wobei der Einstellungsmechanismus ein Kraftanwendungselement (134) umfasst, welches schwenkbar mit dem ersten Einstellungsteil (132) verbunden ist und in Bezug zu dem zweiten Einstellungsteil (133) bewegbar angeordnet ist, wobei sich das Kraftanwendungselement vorzugsweise durch eine Öffnung erstreckt, die in dem zweiten Einstellungsteil (133) vorgesehen ist, wobei die Öffnung (133b) eine Abmessung aufweist, die eine freie Bewegung des Kraftanwendungselements (134) ermöglicht, und wobei der Einstellungsmechanismus vorzugsweise ferner ein Bedienungsmittel zum Bewirken der Bewegung des Kraftanwendungselements (134) umfasst, wobei das Bedienungsmittel vorzugsweise eine Schraube (136) umfasst, welche so mit dem Kraftanwendungselement (134) und dem Hebel (7) in Eingriff kommt, dass eine Drehbewegung der Schraube (136) in eine Bewegung des Kraftanwendungselements (134) in Bezug zu dem zweiten Einstellungsteil (133) in der Längsrichtung der Schraube umgewandelt wird.

12. Lastenträger nach einem der Ansprüche 1 bis 11, wobei das Einstellungsmittel ein Abstandhaltermittel zum Einstellen des Abstands zwischen dem Gelenkpunkt (P) und der Halterung (9) umfasst.

13. Lastenträger nach Anspruch 12, wobei das Abstandhaltermittel einen Keil (94) umfasst, welcher auf einer Seite den Gelenkpunkt (P) stützt und auf der gegenüberliegenden Seite die Halterung (9) kontaktiert, wobei der Keil (94) bewegbar zwischen dem Gelenkpunkt (P) und der Halterung (9) angeordnet ist.

14. Lastenträger nach einem der vorhergehenden Ansprüche, ferner umfassend ein Blockiermittel zum lösbaren Blockieren der Bewegung des Hebels (7), wobei das Blockiermittel ein Eingriffsmittel (75) aufweist, welches mit einem Eingriffsteil (11) in Eingriff gebracht werden kann, das auf dem Kraftübertragungselement (10) gebildet ist.

15. Lastenträger nach einem der vorhergehenden Ansprüche, ferner umfassend den Spannmechanismus (1), wobei der Spannmechanismus (1) an eine Kupplungsvorrichtung montierbar ist, welche eine Kupplungskugel (20) aufweist, die von einem Kupplungskugelhals (21) getragen wird, und das betätigte Element zum direkten oder indirekten Anwenden einer Spannkraft auf die Kupplungsvorrichtung geeignet ist, wobei das betätigte Element durch das Kraftübertragungselement (10), welches vorzugsweise schwenkbar mit dem Kraftanwendungsgelenk (73) verbunden ist und welches vorzugsweise an dem Kraftanwendungsabschnitt (F) schwenkbar mit dem betätigten Element verbunden ist, operativ mit dem Hebel (7) verbunden ist, wobei die Halterung (9) des Betätigungsmechanismus vorzugsweise mit mindestens einer Tellerfeder (91), die zwischen der Halterung (9) und dem Gehäuse (4) angeordnet ist, mit dem Spannmechanismus (1) verbunden ist.

16. Lastenträger nach Anspruch 15, wobei der Spannmechanismus ferner eine Kugelhalteeinrichtung umfasst, welche eine Kugelhaltefläche aufweist, die wenigstens mit einem ersten Bereich der Kupplungskugel in Kontakt zu bringen ist, der gegenüber dem Kupplungskugelhals angeordnet ist, und wobei das betätigte Element mindestens ein Spannelement umfasst, welches eine Kugelklemmfläche aufweist, die wenigstens mit einem zweiten Bereich der Kupplungskugel in Kontakt zu bringen ist, der auf der Seite des Kupplungskugelhalses angeordnet ist.

17. Lastenträger nach Anspruch 15, wobei der Spannmechanismus ferner umfasst:
eine Kugelhalteeinrichtung (3), welche eine Kugelhaltefläche (37) aufweist, die wenigstens mit einem ersten Bereich (20a) der Kupplungskugel (20) in Kontakt zu bringen ist, der gegenüber dem Kupplungskugelhals (21) angeordnet ist,
mindestens ein Spannelement (5), welches eine Kugelklemmfläche (57) aufweist, die wenigstens mit einem zweiten Bereich (20b) der Kupplungskugel (20) in Kontakt zu bringen ist, der auf der Seite des Kupplungskugelhalses (21) angeordnet ist, wobei
das betätigte Element mit jedem des mindestens einen Spannelements (5) so in Wechselwirkung tritt, dass durch Anwenden einer Kraft auf das betätigte Element eine Spannkraft erzielbar ist, die zwischen der Kugelhaltefläche (37) und den Kugelklemmflächen (57) auf die Kupplungskugel (20) wirkt.

18. Lastenträger nach Anspruch 17, wobei der Spannmechanismus mindestens zwei Spannelemente (5) umfasst, welche um eine Mittelachse (CL) der Kugelhaltefläche (37) verteilt sind, wobei jedes der Spannelemente (5) in Bezug zu der Kugelhalteeinrichtung (3) bewegbar angeordnet ist, wobei das betätigte Element ein Spannelement (8) umfasst, welches in Bezug zu der Kugelhalteeinrichtung (3) entlang der Richtung der Mittelachse (CL) bewegbar angeordnet ist.

19. Lastenträger nach Anspruch 18, wobei durch eine Wechselwirkung zwischen dem Spannelement (8) und den mindestens zwei Spannelementen (5) eine Bewegung der mindestens zwei Spannelemente (5) in Richtung der Kugelhaltefläche (37) der Kugelhalteeinrichtung (3) erzielbar ist.

20. Lastenträger nach Anspruch 18 oder 19, wobei durch eine Wechselwirkung des Spannelements (8) und der mindestens zwei Spannelemente (5) eine Bewegung des Spannelements (8) entlang der Richtung der Mittelachse (CL) wenigstens teilweise in eine Bewegung der mindestens zwei Spannelemente (5) in Richtung der Mittelachse (CL) umgewandelt wird.

## Revendications

1. Support de charge (L) avec un actionneur (6) destiné à actionner un mécanisme de serrage (1), l'actionneur (6) comprenant
un levier (7) supporté pivotant sur un support (9) autour d'un pivot (P) et configuré pour être actionné par un utilisateur pour actionner le mécanisme de serrage (1),
une articulation d'application de force (73) reliée audit levier (7),
dans lequel, dans une position de contrainte de tension du levier (7), l'articulation d'application de force (73) est positionnée à une distance préréglable (D) dudit support (9),
un élément de transmission de force (10) relié pivotant à ladite articulation d'application de force (73),
**caractérisé en ce que**
ledit élément de transmission de force (10) est relié pivotant à un élément actionné dudit mécanisme de serrage (1) sur une partie d'application de force (F) pour appliquer une force sur ledit élément actionné, une course de pivotement (d1) entre ladite articulation d'application de force (73) et ledit pivot (P) étant plus petite qu'une course de pivotement (d2) entre ladite articulation d'application de force (73) et ladite partie d'application de force (F), et **en ce que**
ledit support de charge (L) comprend en outre un moyen d'ajustement destiné à prérégler ladite distance préréglable (D) entre ladite articulation d'application de force (73) et ledit support (9) afin d'adapter ladite force de contrainte de tension sur ledit élément actionné.

2. Support de charge selon la revendication 1, dans lequel ledit pivot comprend un axe de pivotement (A2).

3. Support de charge selon la revendication 2, dans lequel ledit axe de pivotement (A2) est agencé de manière stationnaire.

4. Support de charge selon la revendication 2, dans lequel ledit axe de pivotement (2) est guidé de telle manière que la distance la plus courte entre ledit axe de pivotement (A2) et ledit support (9) est variable.

5. Support de charge selon l'une des revendications 2 à 4, comprenant en outre un tourillon (98) définissant ledit axe de pivotement (A2).

6. Support de charge selon l'une des revendications 1 à 5, dans lequel ledit moyen d'ajustement comprend un moyen destiné à ajuster la course de pivotement (d1) entre ledit pivot (P) et ladite articulation d'application de force (73).

7. Support de charge selon la revendication 6, comprenant en outre un moyen d'ajustement doté d'une première portion d'ajustement (122 ; 132) et d'une seconde portion d'ajustement (123 ; 133) agencées mobiles de manière pivotante l'une par rapport à l'autre autour d'un axe de pivotement (P1), ladite articulation d'application de force (73) étant couplée à ladite première portion d'ajustement (122 ; 132) et ledit axe charnière (A2) étant couplé à ladite seconde portion d'ajustement (123 ; 133), et un mécanisme d'ajustement pour provoquer le mouvement desdites première et seconde portions d'ajustement l'une par rapport à l'autre de manière à ajuster ladite course de pivotement (d1) entre ledit axe charnière (A2) dudit levier (7) et ladite articulation d'application de force (73), ladite seconde portion d'ajustement étant de préférence fixée sur ou formée d'un seul tenant avec ledit levier (7).

8. Support de charge selon la revendication 7, dans lequel ladite première portion d'ajustement (122) comprend une première piste de guidage (122a) et ladite seconde portion d'ajustement (123) comprend une seconde piste de guidage (123a), et dans lequel ledit mécanisme d'ajustement comprend une broche (124) guidée dans ladite première et ladite seconde piste de guidage de telle sorte qu'un mouvement de la broche (124) provoque un mouvement desdites première et seconde portions d'ajustement l'une par rapport à l'autre autour dudit axe de pivotement (P1) commun.

9. Support de charge selon la revendication 8, dans lequel ledit mécanisme d'ajustement comprend une tige filetée (126) couplée audit levier (7) à une extrémité et ladite broche (124) comprend une ouverture filetée, ladite broche (124) étant montée sur l'autre extrémité de ladite tige filetée (126) avec la tige filetée passée à travers ladite ouverture de telle sorte que ladite broche (124) est mobile dans la direction longitudinale de ladite tige filetée (126) lors de la rotation de celle-ci, ladite tige filetée (126) comprenant une portion d'actionnement (125) pour faire tourner ladite tige filetée (126).

10. Support de charge selon l'une des revendications 8 et 9, dans lequel chacune desdites première et seconde portions d'ajustement comprend une plaque et chacune desdites première et seconde pistes de guidage comprend une rainure formée dans lesdites plaques, dans lequel lesdites rainures sont de préférence droites et dans lequel ladite première piste de guidage est inclinée par rapport à ladite seconde piste de guidage.

11. Support de charge selon la revendication 7, dans lequel ledit mécanisme d'ajustement comprend un élément d'application de force (134) relié pivotant à ladite première portion d'ajustement (132) et agencé mobile par rapport à ladite seconde portion d'ajustement (133), l'élément d'application de force s'étendant de préférence à travers une ouverture prévue dans ladite seconde portion d'ajustement (133), ladite ouverture (133b) présentant une dimension permettant un mouvement libre de l'élément d'application de force (134), et ledit mécanisme d'ajustement comprenant en outre de préférence un moyen d'actionnement pour provoquer ledit mouvement dudit élément d'application de force (134), ledit moyen d'actionnement comprenant de préférence une vis (136) en prise avec ledit élément d'application de force (134) et ledit levier (7) de telle sorte qu'un mouvement de rotation de ladite vis (136) est transféré dans un mouvement de l'élément d'application de force (134) par rapport à la seconde portion d'ajustement (133) dans la direction longitudinale de la vis.

12. Support de charge selon l'une des revendications 1 à 11, dans lequel ledit moyen d'ajustement comprend un moyen d'écartement destiné à ajuster la distance entre ledit pivot (P) et ledit support (9).

13. Support de charge selon la revendication 12, dans lequel ledit moyen d'écartement comprend un coin (94) supportant ledit pivot (P) d'un côté et venant en contact avec ledit support (9) du côté opposé, ledit coin (94) étant agencé mobile entre ledit pivot (P) et ledit support (9).

14. Support de charge selon l'une des revendications précédentes, comprenant en outre un moyen de verrouillage pour verrouiller de manière libérable le mouvement du levier (7), ledit moyen de verrouillage comportant un élément de prise (75) pouvant être amené en prise avec une portion de prise (11) formée sur ledit élément de transmission de force (10).

15. Support de charge selon l'une des revendications précédentes, comprenant en outre ledit mécanisme de serrage (1), dans lequel ledit mécanisme de serrage (1) peut être monté sur un dispositif de couplage comportant une boule d'attelage (20) supportée par un col de boule d'attelage (21), et ledit élément actionné est adapté pour appliquer directement ou indirectement une force de serrage sur ledit dispositif de couplage, ledit élément actionné étant couplé de manière fonctionnelle audit levier (7) par ledit élément de transmission de force (10) qui est de préférence relié pivotant à ladite articulation d'application de force (73) et qui est de préférence relié pivotant audit élément actionné sur ladite partie d'application de force (F), ledit support (9) dudit actionneur étant couplé audit mécanisme de serrage (1) de préférence avec au moins une rondelle ressort (91) agencée entre ledit support (9) et ledit boîtier (4).

16. Support de charge selon la revendication 15, dans lequel ledit mécanisme de serrage comprend en outre un élément de retenue de boule comportant une surface de support de boule pouvant être amenée en contact au moins avec une première zone de ladite boule d'attelage située à l'opposé dudit col de boule d'attelage, et ledit élément actionné comprenant au moins un élément de serrage comportant une surface de serrage de boule pouvant être amenée en contact au moins avec une seconde zone de ladite boule d'attelage située sur le côté dudit col de boule d'attelage.

17. Support de charge selon la revendication 15, dans lequel ledit mécanisme de serrage comprend en outre
un élément de retenue de boule (3) comportant une surface de support de boule (37) pouvant être amenée en contact au moins avec une première zone (20a) de ladite boule d'attelage (20) située à l'opposé dudit col de boule d'attelage (21),
au moins un élément de serrage (5) comportant une surface de serrage de boule (57) pouvant être amenée en contact au moins avec une seconde zone (20b) de ladite boule d'attelage (20) située sur le côté dudit col de boule d'attelage (21), dans lequel
ledit élément actionné interagit avec chacun desdits au moins un éléments de serrage (5) de telle sorte qu'en appliquant une force sur ledit élément actionné, une force de serrage agissant entre ladite surface de support de boule (37) et lesdites surfaces de serrage de boule (57) sur ladite boule d'attelage (20) peut être obtenue.

18. Support de charge selon la revendication 17, dans lequel ledit mécanisme de serrage comprend au moins deux éléments de serrage (5) qui sont répartis autour d'un axe central (CL) de ladite surface de support de boule (37), chacun desdits éléments de serrage (5) étant agencé mobile par rapport audit élément de retenue de boule (3), ledit élément actionné comprenant un élément de contrainte de tension (8) agencé mobile le long de la direction dudit axe central (CL) par rapport audit élément de retenue de boule (3).

19. Support de charge selon la revendication 18, dans lequel, par une interaction entre ledit élément de contrainte de tension (8) et lesdits au moins deux éléments de serrage (5), un mouvement desdits au moins deux éléments de serrage (5) vers ladite surface de support de boule (37) dudit élément de retenue de boule (3) peut être obtenu.

20. Support de charge selon la revendication 18 ou 19, dans lequel, par une interaction dudit élément de contrainte de tension (8) et desdits au moins deux éléments de serrage (5), un mouvement dudit élément de contrainte de tension (8) le long de la direction dudit axe central (CL) est au moins partiellement transformé en un mouvement desdits au moins deux éléments de serrage (5) vers ledit axe central (CL).
